# EUROPEAN PATENT APPLICATION

(11) **EP 4 686 264 A1**
(43) Date of publication of application: **28.01.2026**
(21) Application number: 24784056.4
(22) Date of filing: 18.03.2024
(51) Int. Cl.: H04W 40/24, H04W 76/15

(54) **COMMUNICATION METHOD AND COMMUNICATION APPARATUS**

(30) Priority: 06.04.2023 CN 202310377816; 18.04.2023 CN 202310460684
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN)
(74) Representative: Goddar, Heinz J.
(86) International application number: PCT/CN2024/082247
(87) International publication number: WO 2024/207971

(57) **Abstract**

This application discloses a communication method and a communication apparatus. This application may be applied to a multi-path relay scenario. The method includes: sending a first message, where the first message includes first indication information, and the first indication information indicates to configure multi-path transmission for a first radio bearer of first user equipment UE and indicates that the first radio bearer is associated with a direct link and an indirect link; and receiving a second message, where the second message includes second indication information, the second indication information indicates that a primary path corresponding to the first radio bearer is included in a first link, and the first link is a direct link or an indirect link associated with the first radio bearer. The first indication information indicates to configure multi-path transmission for the first radio bearer of the first UE and indicates that the first radio bearer is associated with the direct link and the indirect link. This can resolve a problem of how to configure multi-path transmission for a radio bearer in a multi-path relay communication scenario.

## Description

### TECHNICAL FIELD

This application relates to the communication field, and in particular, to a communication method and a communication apparatus.

### BACKGROUND

The 3rd generation partnership project (3rd Generation Partnership Project, 3GPP) researches a multi-path relay (multi-path relay) solution in the R18 version. In a multi-path relay communication scenario, remote (remote) user equipment (user equipment, UE) communicates with a base station through both a direct link (direct link) and an indirect link (indirect link). On the direct link, the remote UE directly communicates with the base station through a Uu interface. On the indirect link, the remote UE communicates with the base station via relay UE (relay UE). The remote UE and the relay UE may be connected to each other through a sidelink (sidelink), or may be connected to each other through an ideal non-3GPP (Non-3GPP) link.

The remote UE may receive or send same data or different data through the two links (the direct link and the indirect link), to improve a throughput and reliability of data receiving and sending. A radio bearer (radio bearer, RB) of the remote UE may be configured in four manners: configured only on a direct link, configured only on an indirect link, configured with packet data convergence protocol (packet data convergence protocol, PDCP) duplication (duplication), or configured with PDCP split (split). In a first case, when the RB of the remote UE is configured only on the direct link, data of the radio bearer of the remote UE is transmitted only through the direct link. In a second case, when the RB of the remote UE is configured only on the indirect link, data of the radio bearer of the remote UE is transmitted only through the indirect link. In a third case, when radio bearer multi-path transmission and the PDCP duplication are configured for the RB of the remote UE, data of the radio bearer of the remote UE is duplicated at a PDCP layer, and then same data is transmitted through both a direct link and an indirect link. In a fourth case, when radio bearer multi-path transmission and the PDCP split are configured for the RB of the remote UE, data of the radio bearer of the remote UE is transmitted through one link based on an implementation or a configuration of a primary path, and the primary path is configured by the base station. In an R18 multi-path relay communication scenario, configuring multi-path transmission for the radio bearer of the remote UE can increase efficiency of transmission of the data of the radio bearer. Specifically, if PDCP duplication is configured and activated, same data may be transmitted through a plurality of paths, thereby improving reliability; or if PDCP duplication (namely, PDCP split) is deactivated, the data of the radio bearer can be transmitted in parallel through a plurality of paths, thereby improving a transmission throughput. Currently, a solution, applicable to the multi-path relay communication scenario, of configuring multi-path transmission has not been disclosed. Therefore, the solution, applicable to the multi-path relay communication scenario, of configuring multi-path transmission needs to be studied.

### SUMMARY

Embodiments of this application disclose a communication method and a communication apparatus, to resolve a problem of how to configure multi-path transmission in a multi-path relay communication scenario.

According to a first aspect, an embodiment of this application provides a communication method. The method includes: sending a first message, where the first message includes first indication information, and the first indication information indicates to configure multi-path transmission for a first radio bearer of first user equipment UE and indicates that the first radio bearer is associated with a direct link and an indirect link; and receiving a second message, where the second message includes second indication information, the second indication information indicates that a primary path (primary path) corresponding to the first radio bearer is included in a first link, and the first link is a direct link or an indirect link associated with the first radio bearer. The first radio bearer may be a signaling radio bearer (signaling radio bearer, SRB), or may be a data radio bearer (data radio bearer, DRB). That the first indication information indicates to configure multi-path transmission for the first radio bearer of the first user equipment UE and indicates that the first radio bearer is associated with the direct link and the indirect link may be replaced with that the first indication information indicates to configure PDCP duplication or PDCP split for the first radio bearer and indicates that the first radio bearer is associated with a direct link and an indirect link. The first aspect may be performed by a first network device, for example, a central unit (central unit, CU) of a network device, for example, a CU of a next generation NodeB (next generation NodeB, gNB), namely, a gNB-CU. In this application, "included in" may be equivalent to or include "associated with". It may be understood that, in this application, "included in" may be replaced with "associated with".

In this embodiment of this application, the first indication information indicates to configure multi-path transmission for the first radio bearer of the first UE and indicates that the first radio bearer is associated with the direct link and the indirect link, to configure multi-path transmission for the first radio bearer of the first UE, and learn whether the primary path corresponding to the first radio bearer is included in the direct link or the indirect link. This can resolve a problem of how to configure multi-path transmission for a radio bearer in a multi-path relay communication scenario.

In a possible implementation, the primary path is used to control a data transmission process when PDCP split or deactivated PDCP duplication is configured for the first radio bearer. In an example, when the PDCP split or the deactivated PDCP duplication is configured for the first radio bearer, data of the first radio bearer is constantly transmitted on the primary path.

In a possible implementation, the first indication information indicates that the first radio bearer is associated with one direct link and one indirect link; and the second indication information indicates a link type of the primary path corresponding to the first radio bearer, where the link type is a direct link or an indirect link. Link types are classified into a direct link and an indirect link. That the first indication information indicates that the first radio bearer is associated with one direct link and one indirect link may be replaced with that the first indication information indicates that the first radio bearer is associated with a first bearer and a second bearer, where the first bearer is a transmission resource that is associated with the first radio bearer and that is for the first UE on the direct link, the second bearer is a transmission resource between first relay UE and a network device, and the second bearer is used to carry the data of the first radio bearer. In an example, the first bearer is a radio link control (radio link control, RLC) bearer. In an example, the first bearer is an RLC bearer (bearer) on the direct link, and the second bearer is a PC5 RLC bearer or a PC5 relay (relay) RLC channel (channel) on the indirect link.

In this implementation, the first radio bearer is associated with one direct link and one indirect link, the second indication information indicates the link type of the primary path corresponding to the first radio bearer, and the primary path corresponding to the first radio bearer can be determined based on the link type.

In a possible implementation, the method further includes: sending configuration information of the first radio bearer to the first UE, where the configuration information includes third indication information, and the third indication information indicates a link type of the primary path corresponding to the first radio bearer. For example, the configuration information of the first radio bearer may be radio bearer configuration information determined by a gNB-CU for the first UE (remote UE).

In this implementation, the third indication information indicates the link type of the primary path corresponding to the first radio bearer, so that the first UE can determine the primary path corresponding to the first radio bearer.

In a possible implementation, the first indication information indicates that the first radio bearer is associated with one direct link and one indirect link; and the second indication information indicates a first bearer corresponding to the primary path corresponding to the first radio bearer, or the second indication information indicates a second bearer corresponding to the primary path corresponding to the first radio bearer. The first bearer is a transmission resource that is associated with the first radio bearer and that is for the first UE on the direct link, the second bearer is a transmission resource between first relay UE and a network device, the second bearer is used to carry the data of the first radio bearer, and the first UE establishes the indirect link to the network device via the first relay UE. For example, the first bearer is an RLC bearer that is associated with the first radio bearer and that is on the direct link, and the second indication information indicates a logical channel identity (logical channel identity, LCID) of the first bearer (an RLC bearer) corresponding to the primary path corresponding to the first radio bearer. For example, the second bearer is a Uu relay (relay) RLC channel (channel) on an indirect link between the first relay UE and the network device, and the second indication information indicates a Uu relay RLC channel, namely, a second bearer corresponding to the primary path corresponding to the first radio bearer. For example, the second bearer is a transmission resource between the first relay UE and a distributed unit (distributed unit, DU) of the network device. In this application, the network device is a radio access network (radio access network, RAN) node or device that connects UE to a wireless network, for example, a base station, a gNB, an eNB, or an ng-eNB.

In this implementation, the second indication information indicates the first bearer corresponding to the primary path corresponding to the first radio bearer, or the second indication information indicates the second bearer corresponding to the primary path corresponding to the first radio bearer, so that the primary path corresponding to the first radio bearer is determined based on the second indication information.

In a possible implementation, the method further includes: sending configuration information of the first radio bearer to the first UE, where the configuration information includes third indication information, the third indication information indicates the first bearer or the second bearer corresponding to the primary path corresponding to the first radio bearer, or the third indication information indicates a third bearer corresponding to the primary path corresponding to the first radio bearer, the third bearer is a transmission resource between the first UE and the first relay UE, and the third bearer is used to carry the data of the first radio bearer. For example, the third bearer is a PC5 relay RLC channel on an indirect link between the first UE and the relay UE.

In this implementation, the third indication information indicates the first bearer or the second bearer corresponding to the primary path corresponding to the first radio bearer, so that the first UE can determine the primary path corresponding to the first radio bearer.

In a possible implementation, the first indication information indicates that the first radio bearer is associated with one or more first bearers and indicates that the first radio bearer is associated with one or more second bearers. The second indication information indicates a first bearer corresponding to the primary path of the first radio bearer, or the second indication information indicates that the primary path of the first radio bearer corresponds to an indirect link, or the second indication information indicates a second bearer corresponding to the primary path of the first radio bearer, or the second indication information indicates relay UE corresponding to the primary path of the first radio bearer. The first bearer is a transmission resource that is associated with the first radio bearer and that is for the first UE on the direct link, the second bearer is a transmission resource between one or more relay UEs and a network device, the second bearer is used to carry the data of the first radio bearer, and the first UE establishes an indirect link to the network device via the one or more relay UEs.

In this implementation, the second indication information indicates the first bearer corresponding to the primary path corresponding to the first radio bearer, or the second indication information indicates the second bearer corresponding to the primary path corresponding to the first radio bearer, or the second indication information indicates the relay UE corresponding to the primary path corresponding to the first radio bearer, so that the primary path corresponding to the first radio bearer is determined based on the second indication information.

In a possible implementation, the method further includes: sending configuration information of the first radio bearer to the first UE, where the configuration information includes third indication information, the third indication information indicates the first bearer or the second bearer corresponding to the primary path corresponding to the first radio bearer, or the third indication information indicates that the primary path of the first radio bearer corresponds to an indirect link, or the third indication information indicates relay UE corresponding to the primary path of the first radio bearer, or the third indication information indicates a third bearer corresponding to the primary path corresponding to the first radio bearer, the third bearer is a transmission resource between the first UE and first relay UE, the third bearer is used to carry the data of the first radio bearer, and the first relay UE is relay UE associated with the primary path of the first radio bearer.

In this implementation, the first UE can determine, based on the third indication information, the primary path corresponding to the first radio bearer.

In a possible implementation, the first indication information further indicates that the first radio bearer is associated with one or more third bearers, the third bearer is a transmission resource between the first UE and first relay UE, the first relay UE is relay UE associated with the primary path of the first radio bearer, and the third bearer is used to carry the data of the first radio bearer. For example, the third bearer is a PC5 relay RLC channel on an indirect link between the first UE and the relay UE.

In this implementation, the first indication information further indicates that the first radio bearer is associated with the one or more third bearers. When the primary path corresponding to the first radio bearer is included in the indirect link, a third bearer corresponding to the primary path corresponding to the first radio bearer can be determined.

In a possible implementation, the second indication information indicates a third bearer corresponding to the primary path corresponding to the first radio bearer.

In this implementation, the second indication information indicates the third bearer corresponding to the primary path corresponding to the first radio bearer, and may indicate the primary path of the first radio bearer.

In a possible implementation, the method further includes: sending configuration information of the first radio bearer to the first UE, where the configuration information includes third indication information, and the third indication information indicates the third bearer corresponding to the primary path corresponding to the first radio bearer.

In this implementation, the first UE can determine the primary path of the first radio bearer.

In a possible implementation, the first message further includes fourth indication information, and the fourth indication information indicates to maintain an original indirect link of the first UE when a direct link is added for the first UE.

In this implementation, the fourth indication information can be used to maintain the original indirect link of the first UE when the direct link is added for the first UE, to configure multi-path transmission.

In a possible implementation, the first message further includes fourth indication information, and the fourth indication information indicates to maintain an original direct link of the first UE when an indirect link is added for the first UE.

In this implementation, the fourth indication information can be used to maintain the original direct link of the first UE when the indirect link is added for the first UE, to configure multi-path transmission.

In a possible implementation, the fourth indication information carries an identifier of relay UE corresponding to the original indirect link that is of the first UE and that needs to be maintained.

In a possible implementation, the first message further includes at least one of the identifier of the relay UE, a local identifier of the first UE, or timer information, where the relay UE corresponds to an indirect link that needs to be established for the first UE, or the relay UE corresponds to the original indirect link of the first UE, the timer information is used by the first UE to determine whether a link failure occurs on the indirect link of the first UE, and the local identifier of the first UE is an identifier allocated by the network device to the first UE.

The first message includes the identifier of the relay UE and the local identifier of the first UE, so that an indirect link between the first UE and the relay UE is established based on the first message.

In a possible implementation, the configuration information further includes fifth indication information, and the fifth indication information indicates to maintain an original indirect link of the first UE when a direct link is added for the first UE, or the fifth indication information indicates to maintain an original direct link of the first UE when an indirect link is added for the first UE.

In this implementation, the first UE can establish multi-path transmission based on the fifth indication information.

In a possible implementation, the direct link is a link through which the UE directly communicates with the network device through a radio link, and the indirect link is a link through which the UE communicates with the network device via a relay device.

According to a second aspect, an embodiment of this application provides another communication method. The method includes: receiving a first message, where the first message includes first indication information, and the first indication information indicates to configure multi-path transmission for a first radio bearer of first UE and indicates that the first radio bearer is associated with a direct link and an indirect link; and sending a second message, where the second message includes second indication information, the second indication information indicates that a primary path corresponding to the first radio bearer is included in a first link, and the first link is a direct link or an indirect link associated with the first radio bearer. That the first indication information indicates to configure multi-path transmission for the first radio bearer of the first UE and indicates that the first radio bearer is associated with the direct link and the indirect link may be replaced with that the first indication information indicates to configure PDCP duplication or PDCP split for the first radio bearer and indicates that the first radio bearer is associated with a direct link and an indirect link. The second message may be a message sent for the first message. The second aspect may be performed by a second network device.

In this embodiment of this application, a DU of the network device may learn, based on the first indication information, that multi-path transmission is configured for the first radio bearer of the first UE and that the first radio bearer is associated with the direct link and the indirect link. The second message is sent to indicate that the primary path corresponding to the first radio bearer is included in the first link, so that a problem of how to configure multi-path transmission for a radio bearer in a multi-path relay communication scenario can be resolved.

In a possible implementation, the primary path is used to control a data transmission process when the PDCP split or deactivated PDCP duplication is configured for the first radio bearer. In an example, when the PDCP split or the deactivated PDCP duplication is configured for the first radio bearer, data of the first radio bearer is constantly transmitted on the primary path.

In a possible implementation, the first indication information indicates that the first radio bearer is associated with one direct link and one indirect link; and the second indication information indicates a link type of the primary path corresponding to the first radio bearer, where the link type is a direct link or an indirect link. That the first indication information indicates that the first radio bearer is associated with one direct link and one indirect link may be replaced with that the first indication information indicates that the first radio bearer is associated with a first bearer and a second bearer, where the first bearer is a transmission resource that is associated with the first radio bearer and that is for the first UE on the direct link, the second bearer is a transmission resource between first relay UE and a network device, and the second bearer is used to carry the data of the first radio bearer. In an example, the first bearer is an RLC bearer. In an example, the first bearer is an RLC bearer on the direct link, and the second bearer is a PC5 RLC bearer or a PC5 relay RLC channel on the indirect link.

In this implementation, the first radio bearer is associated with the direct link and the indirect link, the second indication information indicates the link type of the primary path corresponding to the first radio bearer, and the primary path corresponding to the first radio bearer can be determined based on the link type.

In a possible implementation, the first indication information indicates that the first radio bearer is associated with one direct link and one indirect link; and the second indication information indicates a first bearer corresponding to the primary path corresponding to the first radio bearer, or the second indication information indicates a second bearer corresponding to the primary path corresponding to the first radio bearer. The first bearer is a transmission resource that is associated with the first radio bearer and that is for the first UE on the direct link, the second bearer is a transmission resource between first relay UE and a network device, the second bearer is used to carry the data of the first radio bearer, and the first UE establishes the indirect link to the network device via the first relay UE.

In this implementation, the second indication information indicates the first bearer corresponding to the primary path corresponding to the first radio bearer, or the second indication information indicates the second bearer corresponding to the primary path corresponding to the first radio bearer, so that the primary path corresponding to the first radio bearer is determined based on the second indication information.

In a possible implementation, the first indication information indicates that the first radio bearer is associated with one or more first bearers and indicates that the first radio bearer is associated with one or more second bearers. The second indication information indicates a first bearer corresponding to the primary path of the first radio bearer, or the second indication information indicates that the primary path of the first radio bearer corresponds to an indirect link, or the second indication information indicates a second bearer corresponding to the primary path of the first radio bearer, or the second indication information indicates relay UE corresponding to the primary path of the first radio bearer. The first bearer is a transmission resource that is associated with the first radio bearer and that is for the first UE on the direct link, the second bearer is a transmission resource between one or more relay UEs and a network device, the second bearer is used to carry the data of the first radio bearer, and the first UE establishes an indirect link to the network device via the one or more relay UEs.

In this implementation, the second indication information indicates the first bearer corresponding to the primary path corresponding to the first radio bearer, or the second indication information indicates the second bearer corresponding to the primary path corresponding to the first radio bearer, or the second indication information indicates the relay UE corresponding to the primary path corresponding to the first radio bearer, so that the primary path corresponding to the first radio bearer is determined based on the second indication information.

In a possible implementation, the first indication information further indicates that the first radio bearer is associated with one or more third bearers, the third bearer is a transmission resource between the first UE and relay UE, and the third bearer is used to carry the data of the first radio bearer.

In this implementation, the first indication information further indicates that the first radio bearer is associated with the one or more third bearers. When the primary path corresponding to the first radio bearer is included in the indirect link, a third bearer corresponding to the primary path corresponding to the first radio bearer can be determined.

In a possible implementation, the second indication information indicates a third bearer corresponding to the primary path corresponding to the first radio bearer.

In this implementation, the second indication information indicates the third bearer corresponding to the primary path corresponding to the first radio bearer, and may indicate the primary path of the first radio bearer.

In a possible implementation, the first message further includes fourth indication information, and the fourth indication information indicates to maintain an original indirect link of the first UE when a direct link is added for the first UE.

In this implementation, the fourth indication information can be used to maintain the original indirect link of the first UE when the direct link is added for the first UE, to configure multi-path transmission.

In a possible implementation, the first message further includes fourth indication information, and the fourth indication information indicates to maintain an original direct link of the first UE when an indirect link is added for the first UE.

In this implementation, the fourth indication information can be used to maintain the original direct link of the first UE when the indirect link is added for the first UE, to configure multi-path transmission.

In a possible implementation, the fourth indication information carries an identifier of relay UE corresponding to the original indirect link that is of the first UE and that needs to be maintained.

In a possible implementation, the first message further includes at least one of the identifier of the relay UE, a local identifier of the first UE, or timer information, where the relay UE corresponds to an indirect link that needs to be established for the first UE, or the relay UE corresponds to the original indirect link of the first UE, the timer information is used by the first UE to determine whether a link failure occurs on the indirect link of the first UE, and the local identifier of the first UE is an identifier allocated by the network device to the first UE.

The first message includes the identifier of the relay UE and the local identifier of the first UE, so that an indirect link between the first UE and the relay UE is established based on the first message.

In a possible implementation, the direct link is a link through which the UE directly communicates with the network device through a radio link, and the indirect link is a link through which the UE communicates with the network device via a relay device.

According to a third aspect, an embodiment of this application provides another communication method. The method includes: receiving configuration information of a first radio bearer, where the configuration information indicates first UE to establish a plurality of links to a network device, the plurality of links include a direct link and an indirect link, the configuration information includes third indication information, and the third indication information indicates a primary path corresponding to the first radio bearer; and establishing the plurality of links based on the configuration information. The third aspect may be performed by the first UE.

In this embodiment of this application, the third indication information included in the configuration information indicates the primary path corresponding to the first radio bearer. The plurality of links are established based on the configuration information, so that multi-path transmission can be implemented, and the primary path corresponding to the first radio bearer can be determined.

In a possible implementation, the primary path is used to control a data transmission process when PDCP split or deactivated PDCP duplication is configured for the first radio bearer. In an example, when the PDCP split or the deactivated PDCP duplication is configured for the first radio bearer, data of the first radio bearer is constantly transmitted on the primary path.

In a possible implementation, the configuration information further includes fifth indication information, and the fifth indication information indicates to maintain an original indirect link of the first UE when a direct link is added for the first UE, or the fifth indication information indicates to maintain an original direct link of the first UE when an indirect link is added for the first UE.

In this implementation, the first UE can establish multi-path transmission based on the fifth indication information.

In a possible implementation, the third indication information indicates a link type of the primary path corresponding to the first radio bearer.

In a possible implementation, the third indication information indicates a first bearer or a second bearer corresponding to the primary path corresponding to the first radio bearer, the first bearer is a transmission resource that is associated with the first radio bearer and that is for the first UE on the direct link, the second bearer is a transmission resource between first relay UE and a network device, the second bearer is used to carry the data of the first radio bearer, and the first UE establishes the indirect link to the network device via the first relay UE; or the third indication information indicates a third bearer corresponding to the primary path corresponding to the first radio bearer, the third bearer is a transmission resource between the first UE and first relay UE, and the third bearer is used to carry the data of the first radio bearer.

In a possible implementation, the third indication information indicates that the primary path of the first radio bearer corresponds to an indirect link type, or the third indication information indicates relay UE associated with the primary path corresponding to the first radio bearer.

In a possible implementation, the third indication information indicates a third bearer corresponding to the primary path corresponding to the first radio bearer, the third bearer is a transmission resource between the first UE and first relay UE, the first relay UE is relay UE associated with the primary path of the first radio bearer, and the third bearer is used to carry the data of the first radio bearer.

In a possible implementation, the direct link is a link through which the UE directly communicates with the network device through a radio link, and the indirect link is a link through which the UE communicates with the network device via a relay device.

According to a fourth aspect, an embodiment of this application provides another communication method. The method includes: sending a first message, where the first message includes first indication information, the first indication information indicates to establish a plurality of first channels for a first radio bearer of first UE and indicates that the first radio bearer is associated with a direct link and an indirect link, and the first channel is a data transmission channel between a first network device and a second network device, and is used to carry data of the first radio bearer of the first UE, for example, the first network device is a CU, the second network device is a DU, and the first channel is a general packet radio system tunneling protocol user plane (general packet radio system tunneling protocol user plane, GTP-U) tunnel (tunnel); and receiving a second message, where the second message includes second indication information, the second indication information indicates that a primary path corresponding to the first radio bearer is included in a second link, and the second link is a direct link or an indirect link. In an example, the first radio bearer may be a DRB or an SRB. The fourth aspect may be performed by the first network device.

In this embodiment of this application, the first indication information indicates to establish the plurality of first channels for the first radio bearer and indicates that the first radio bearer is associated with the direct link and the indirect link, to establish multi-path transmission based on the first indication information. In addition, the second indication information indicates that the primary path corresponding to the first radio bearer is included in the second link, so that a problem of how to configure multi-path transmission for a radio bearer in a multi-path relay communication scenario can be resolved.

According to a fifth aspect, an embodiment of this application provides another communication method. The method includes: receiving a first message, where the first message includes first indication information, the first indication information indicates to establish a plurality of first channels for a first radio bearer of first UE and indicates that the first radio bearer is associated with a direct link and an indirect link, and the first channel is a data transmission channel between a first network device and a second network device, and is used to carry data of the first radio bearer of the first UE, for example, the first network device is a CU, the second network device is a DU, and the first channel is a GTP-U tunnel; and sending a second message, where the second message includes second indication information, the second indication information indicates that a primary path corresponding to the first radio bearer is included in a second link, and the second link is a direct link or an indirect link. The fifth aspect may be performed by the second network device.

In this embodiment of this application, the first indication information indicates to establish the plurality of GTP-U tunnels for the first radio bearer of the first UE and indicates that at least one of the plurality of GTP-U tunnels is used to carry data on a second bearer associated with the first radio bearer, to establish multi-path transmission based on the first indication information. In addition, the second indication information indicates that the primary path corresponding to the first radio bearer is included in the second link, so that a problem of how to configure multi-path transmission in a multi-path relay communication scenario can be resolved.

In a possible implementation of the fourth aspect or the fifth aspect, the primary path is used to control a data transmission process when PDCP split or deactivated PDCP duplication is configured for the first radio bearer. In an example, when the PDCP split or the deactivated PDCP duplication is configured for the first radio bearer, the data of the first radio bearer is constantly transmitted on the primary path.

In a possible implementation of the fourth aspect or the fifth aspect, the first indication information is used to establish the plurality of first channels and indicates that at least one of the plurality of first channels is used to carry the data on the second bearer associated with the first radio bearer, and the second bearer is a transmission resource between relay UE and a network device, the second bearer is used to carry the data of the first radio bearer. The first UE establishes an indirect link to the network device via the relay UE. In an example, the first radio bearer is a DRB, and the second bearer is a Uu relay RLC channel.

In a possible implementation of the fourth aspect or the fifth aspect, the first indication information indicates to establish a plurality of first channels for the first user equipment UE, and indicates that a part of the plurality of first channels are used to carry data on a first bearer associated with the first radio bearer, and a part of the channels are used to carry the data on the second bearer associated with the first radio bearer. The first bearer is a transmission resource that is associated with the first radio bearer and that is for the first UE on the direct link, the second bearer is a transmission resource between one or more relay UEs and a network device, the second bearer is used to carry the data of the first radio bearer, and the first UE establishes an indirect link to the network device via the one or more relay UEs. In an example, the first radio bearer is a DRB, and the second bearer is a Uu relay RLC channel.

In a possible implementation of the fourth aspect or the fifth aspect, the first indication information indicates to establish a plurality of first channels for the first UE, and indicates that a part of the plurality of first channels are used to carry data on a first bearer associated with the first radio bearer, and a part of the channels are used to carry data on a third bearer associated with the first radio bearer. The first bearer is a transmission resource that is associated with the first radio bearer and that is for the first UE on the direct link, the third bearer is a transmission resource between the first UE and relay UE, and the third bearer is used to carry the data of the first radio bearer. The first UE establishes an indirect link to the network device via the relay UE. For example, the first radio bearer is a DRB, the first bearer is a Uu RLC bearer on the direct link of the first UE, and the third bearer is a PC5 relay RLC channel on the indirect link between the first UE and the relay UE.

In this implementation, the first indication information indicates to establish the plurality of GTP-U tunnels used to carry a direct link and an indirect link, to configure multi-path transmission for the first radio bearer in a process of establishing a plurality of paths.

In a possible implementation of the fourth aspect or the fifth aspect, when any channel in the plurality of first channels carries data on the PC5 relay RLC channel associated with the first radio bearer, the any channel further includes identification (identify, ID) information of the Uu relay RLC channel associated with the first radio bearer or identification (identify, ID) information of the PC5 relay RLC channel associated with the first radio bearer.

In this implementation, the CU indicates the DU to establish a plurality of first channels, to indicate to configure multi-path transmission for the first radio bearer. The DU determines the primary path based on the plurality of first channels, to determine multi-path configuration.

In a possible implementation of the fourth aspect or the fifth aspect, the first indication information indicates that the first radio bearer is associated with one direct link and one indirect link; and the second indication information indicates a link type of the primary path corresponding to the first radio bearer, where the link type is a direct link or an indirect link.

In a possible implementation of the fourth aspect, the method further includes: sending configuration information of the first radio bearer to the first UE, where the configuration information includes third indication information, and the third indication information indicates a link type of the primary path corresponding to the first radio bearer. For example, the configuration information of the first radio bearer may be radio bearer configuration information determined by a gNB-CU for the first UE (remote UE).

In this implementation, the third indication information indicates the link type of the primary path corresponding to the first radio bearer, so that the first UE can determine the primary path corresponding to the first radio bearer.

In a possible implementation of the fourth aspect or the fifth aspect, the first indication information indicates that the first radio bearer is associated with one or more first bearers and indicates that the first radio bearer is associated with one or more second bearers. The second indication information indicates a first bearer corresponding to the primary path of the first radio bearer, or the second indication information indicates that the primary path of the first radio bearer corresponds to an indirect link, or the second indication information indicates a second bearer corresponding to the primary path of the first radio bearer, or the second indication information indicates relay UE corresponding to the primary path of the first radio bearer. The first bearer is a transmission resource that is associated with the first radio bearer and that is for the first UE on the direct link, the second bearer is a transmission resource between one or more relay UEs and a network device, the second bearer is used to carry the data of the first radio bearer, and the first UE establishes an indirect link to the network device via the one or more relay UEs.

In this implementation, the second indication information indicates the first bearer corresponding to the primary path corresponding to the first radio bearer, or the second indication information indicates the second bearer corresponding to the primary path corresponding to the first radio bearer, or the second indication information indicates a third bearer corresponding to the primary path corresponding to the first radio bearer, or the second indication information indicates the relay UE corresponding to the primary path of the first radio bearer, so that the primary path corresponding to the first radio bearer is determined based on the second indication information.

In a possible implementation of the fourth aspect, the method further includes: sending configuration information of the first radio bearer to first UE, where the configuration information includes third indication information, the third indication information indicates the first bearer or the second bearer corresponding to the primary path corresponding to the first radio bearer, or the third indication information indicates that the primary path of the first radio bearer corresponds to an indirect link, or the third indication information indicates relay UE associated with the primary path corresponding to the first radio bearer, or the third indication information indicates a third bearer corresponding to the primary path corresponding to the first radio bearer, the third bearer is a transmission resource between the first UE and the relay UE, the relay UE is relay UE associated with the primary path, and the third bearer is used to carry the data of the first radio bearer.

In this implementation, the first UE can determine, based on the third indication information, the primary path corresponding to the first radio bearer.

In a possible implementation of the fourth aspect or the fifth aspect, the first indication information further indicates a mapping relationship between the first radio bearer and one or more third bearers, or the first indication information further indicates one or more third bearers corresponding to the plurality of GPT-U tunnels, the third bearer is a transmission resource between the first UE and relay UE, and the third bearer is used to carry the data of the first radio bearer. For example, the third bearer is a PC5 relay RLC channel on an indirect link between the first UE and the relay UE.

In this implementation, the first indication information further indicates that the first radio bearer is associated with the one or more third bearers. When the primary path corresponding to the first radio bearer is included in the indirect link, a third bearer corresponding to the primary path corresponding to the first radio bearer can be determined.

In a possible implementation of the fourth aspect or the fifth aspect, the second indication information indicates the third bearer corresponding to the primary path corresponding to the first radio bearer.

In this implementation, the second indication information indicates the third bearer corresponding to the primary path corresponding to the first radio bearer, and may indicate the primary path of the first radio bearer.

In a possible implementation of the fourth aspect, the method further includes: sending configuration information of the first radio bearer to the first UE, where the configuration information includes third indication information, and the third indication information indicates the third bearer corresponding to the primary path corresponding to the first radio bearer.

In this implementation, the first UE can determine the primary path of the first radio bearer.

In a possible implementation of the fourth aspect or the fifth aspect, the first message further includes fourth indication information, and the fourth indication information indicates to maintain an original indirect link of the first UE when a direct link is added for the first UE.

In this implementation, the fourth indication information can be used to maintain the original indirect link of the first UE when the direct link is added for the first UE, to configure multi-path transmission.

In a possible implementation of the fourth aspect or the fifth aspect, the fourth indication information carries an identifier of relay UE corresponding to the original indirect link that is of the first UE and that needs to be maintained.

In a possible implementation of the fourth aspect or the fifth aspect, the first message further includes at least one of the identifier of the relay UE, a local identifier of the first UE, or timer information, where the relay UE corresponds to an indirect link that needs to be established for the first UE, or the relay UE corresponds to the original indirect link of the first UE, the timer information is used by the first UE to determine whether a link failure occurs on the indirect link of the first UE, and the local identifier of the first UE is an identifier allocated by the network device to the first UE.

The first message includes the identifier of the relay UE and the local identifier of the first UE, so that an indirect link between the first UE and the relay UE is established based on the first message.

In a possible implementation of the fourth aspect or the fifth aspect, the configuration information further includes fifth indication information, and the fifth indication information indicates to maintain an original indirect link of the first UE when a direct link is added for the first UE, or the fifth indication information indicates to maintain an original direct link of the first UE when an indirect link is added for the first UE.

In this implementation, the first UE can establish multi-path transmission based on the fifth indication information.

In a possible implementation of the fourth aspect or the fifth aspect, the direct link is a link through which the UE directly communicates with the network device through a radio link, and the indirect link is a link through which the UE communicates with the network device via a relay device.

According to a sixth aspect, an embodiment of this application provides another communication method. The method includes: sending a first message, where the first message includes first indication information, the first indication information indicates to establish a plurality of first channels for a first radio bearer of first UE, the first indication information further indicates that a primary path corresponding to the first radio bearer is on a direct link or an indirect link, or the first indication information further indicates a first channel associated with a primary path corresponding to the first radio bearer, and the first channel is a data transmission channel between a first network device and a second network device, and is used to carry data of the first radio bearer of the first UE, for example, the first network device is a CU, the second network device is a DU, and the first channel is a GTP-U tunnel; and sending configuration information of the first radio bearer to the first UE, where the configuration information includes third indication information, and the third indication information indicates the primary path corresponding to the first radio bearer. The sixth aspect may be performed by the first network device.

In this embodiment of this application, the first indication information indicates to establish the plurality of GTP-U tunnels for the first radio bearer and indicates the primary path, so that a problem of how to configure multi-path transmission in a multi-path relay communication scenario can be resolved.

In a possible implementation, the primary path is used to control a data transmission process when PDCP split or deactivated PDCP duplication is configured for the first radio bearer. In an example, when the PDCP split or the deactivated PDCP duplication is configured for the first radio bearer, the data of the first radio bearer is constantly transmitted on the primary path.

In a possible implementation, the method further includes: receiving a second message, where second indication information in the second message indicates an identifier of a first bearer corresponding to the primary path corresponding to the first radio bearer, or the second indication information indicates that the primary path corresponding to the first radio bearer is associated with an indirect link. The first bearer is a transmission resource that is associated with the first radio bearer and that is for the first UE on the direct link. For example, the first bearer is an RLC bearer.

In a possible implementation, the third indication information indicates a link type associated with the primary path of the first radio bearer.

In a possible implementation, the third indication information indicates the identifier of the first bearer or an identifier of a third bearer associated with the primary path of the first radio bearer. The third bearer is a transmission resource between the first UE and relay UE, and the third bearer is used to carry the data of the first radio bearer.

According to a seventh aspect, an embodiment of this application provides another communication method. The method includes: receiving a first message, where the first message includes first indication information, the first indication information indicates to establish a plurality of first channels for a first radio bearer, the first indication information further indicates that a primary path corresponding to the first radio bearer is on a direct link or an indirect link, or the first indication information further indicates a first channel associated with a primary path corresponding to the first radio bearer, and the first channel is a data transmission channel between a first network device and a second network device, and is used to carry data of the first radio bearer of the first UE, for example, the first network device is a CU, the second network device is a DU, and the first channel is a GTP-U tunnel; and determining, based on the first message, the primary path corresponding to the first radio bearer and to establish the plurality of first channels for the first radio bearer. The seventh aspect may be performed by the second network device.

In this embodiment of this application, the primary path corresponding to the first radio bearer is determined based on the first message, and the plurality of GTP-U tunnels are established for the first radio bearer, so that a problem of how to configure multi-path transmission in a multi-path relay communication scenario can be resolved.

In a possible implementation, the primary path is used to control a data transmission process when PDCP split or deactivated PDCP duplication is configured for the first radio bearer. In an example, when the PDCP split or the deactivated PDCP duplication is configured for the first radio bearer, the data of the first radio bearer is constantly transmitted on the primary path.

In a possible implementation, the method further includes: sending a second message, where second indication information in the second message indicates an identifier of a first bearer corresponding to the primary path corresponding to the first radio bearer, or the second indication information indicates that the primary path corresponding to the first radio bearer is associated with an indirect link. The first bearer is a transmission resource that is associated with the first radio bearer and that is for the first UE on the direct link. For example, the first bearer is an RLC bearer.

According to an eighth aspect, an embodiment of this application provides another communication method. The method includes: sending a first message, where the first message includes first indication information, the first indication information indicates to configure multi-path transmission for a first radio bearer of first UE and indicates that a primary path corresponding to the first radio bearer is included in a first link, and the first link is a direct link or an indirect link associated with the first radio bearer; and sending configuration information of the first radio bearer to the first UE, where the configuration information includes third indication information, and the third indication information indicates the primary path of the first radio bearer. The eighth aspect may be performed by a first network device.

In this embodiment of this application, the first indication information indicates to configure multi-path transmission for the first radio bearer of the first UE and indicates that the primary path corresponding to the first radio bearer is included in the first link, so that multi-path transmission in a multi-path scenario can be implemented.

In a possible implementation, the primary path is used to control a data transmission process when PDCP split or deactivated PDCP duplication is configured for the first radio bearer. In an example, when the PDCP split or the deactivated PDCP duplication is configured for the first radio bearer, data of the first radio bearer is constantly transmitted on the primary path.

In a possible implementation, the first indication information indicates a link type corresponding to the primary path corresponding to the first radio bearer.

In a possible implementation, the first indication information indicates that the primary path corresponding to the first radio bearer is included in the direct link. The method further includes: receiving a second message, where the second message comprises indicating a first bearer corresponding to the primary path corresponding to the first radio bearer, and the first bearer is a transmission resource that is associated with the first radio bearer and that is for the first UE on the direct link. For example, the first bearer is an RLC bearer.

In another possible implementation, the first indication information indicates to configure multi-path transmission for the first radio bearer of the first UE and indicates that the primary path corresponding to the first radio bearer is associated with a second bearer, the second bearer is a transmission resource between relay UE and a network device, the second bearer is used to carry the data of the first radio bearer, and the first UE establishes an indirect link to the network device via the relay UE. For example, the second bearer is a Uu relay RLC channel. In a possible implementation, the third indication information indicates a link type associated with the primary path of the first radio bearer.

In a possible implementation, the third indication information indicates an identifier of the first bearer or an identifier of a third bearer associated with the primary path of the first radio bearer. The third bearer is a transmission resource between the first UE and the relay UE, and the third bearer is used to carry the data of the first radio bearer.

According to a ninth aspect, an embodiment of this application provides another communication method. The method includes: receiving a first message, where the first message includes first indication information, the first indication information indicates to configure multi-path transmission for a first radio bearer of first UE and indicates that a primary path corresponding to the first radio bearer is included in a first link, and the first link is a direct link or an indirect link associated with the first radio bearer; and determining, based on the first message, to configure multi-path transmission for the first radio bearer and that the primary path corresponding to the first radio bearer is included in the first link. The ninth aspect may be performed by a second network device.

In this embodiment of this application, the first indication information indicates to configure multi-path transmission for the first radio bearer of the first UE and indicates that the primary path corresponding to the first radio bearer is included in the first link, so that multi-path transmission in a multi-path scenario can be implemented.

In a possible implementation, the primary path is used to control a data transmission process when PDCP split or deactivated PDCP duplication is configured for the first radio bearer. In an example, when the PDCP split or the deactivated PDCP duplication is configured for the first radio bearer, data of the first radio bearer is constantly transmitted on the primary path.

In a possible implementation, the first indication information further indicates a quantity of PC5 relay RLC channels associated with the first radio bearer.

In a possible implementation, the first indication information further indicates a Uu relay RLC channel associated with the primary path corresponding to the first radio bearer.

According to a tenth aspect, an embodiment of this application provides a communication apparatus. The communication apparatus has a function of implementing a behavior in the method embodiment in the first aspect. The communication apparatus may be a network device, or may be a component (for example, a processor, a chip, or a chip system) of a network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a first message. The transceiver module is configured to send the first message, where the first message includes first indication information, and the first indication information indicates to configure multi-path transmission for a first radio bearer of first user equipment UE and indicates that the first radio bearer is associated with a direct link and an indirect link. The transceiver module is further configured to receive a second message, where the second message includes second indication information, the second indication information indicates that a primary path (primary path) corresponding to the first radio bearer is included in a first link, and the first link is a direct link or an indirect link associated with the first radio bearer.

In a possible implementation, the first indication information indicates that the first radio bearer is associated with one direct link and one indirect link; and the second indication information indicates a link type of the primary path corresponding to the first radio bearer, where the link type is a direct link or an indirect link.

In a possible implementation, the transceiver module is further configured to send configuration information of the first radio bearer to the first UE, where the configuration information includes third indication information, and the third indication information indicates a link type of the primary path corresponding to the first radio bearer.

In a possible implementation, the first indication information indicates that the first radio bearer is associated with one direct link and one indirect link; and the second indication information indicates a first bearer corresponding to the primary path corresponding to the first radio bearer, or the second indication information indicates a second bearer corresponding to the primary path corresponding to the first radio bearer. The first bearer is a transmission resource that is associated with the first radio bearer and that is for the first UE on the direct link, the second bearer is a transmission resource between first relay UE and a network device, the second bearer is used to carry data of the first radio bearer, and the first UE establishes the indirect link to the network device via the first relay UE.

In a possible implementation, the transceiver module is further configured to send configuration information of the first radio bearer to the first UE, where the configuration information includes third indication information, and the third indication information indicates the first bearer or the second bearer corresponding to the primary path corresponding to the first radio bearer.

In a possible implementation, the first indication information indicates that the first radio bearer is associated with one or more first bearers and indicates that the first radio bearer is associated with one or more second bearers. The second indication information indicates a first bearer corresponding to the primary path of the first radio bearer, or the second indication information indicates that the primary path of the first radio bearer corresponds to an indirect link, or the second indication information indicates a second bearer corresponding to the primary path of the first radio bearer, or the second indication information indicates relay UE corresponding to the primary path of the first radio bearer. The first bearer is a transmission resource that is associated with the first radio bearer and that is for the first UE on the direct link, the second bearer is a transmission resource between one or more relay UEs and a network device, the second bearer is used to carry data of the first radio bearer, and the first UE establishes an indirect link to the network device via the one or more relay UEs.

In a possible implementation, the transceiver module is further configured to send configuration information of the first radio bearer to the first UE, where the configuration information includes third indication information, and the third indication information indicates the first bearer or the second bearer corresponding to the primary path corresponding to the first radio bearer, or the third indication information indicates that the primary path of the first radio bearer corresponds to an indirect link, or the third indication information indicates relay UE corresponding to the primary path of the first radio bearer.

In a possible implementation, the first indication information further indicates that the first radio bearer is associated with one or more third bearers, the third bearer is a transmission resource between the first UE and relay UE, and the third bearer is used to carry data of the first radio bearer.

In a possible implementation, the second indication information indicates a third bearer corresponding to the primary path corresponding to the first radio bearer.

In a possible implementation, the transceiver module is further configured to send configuration information of the first radio bearer to the first UE, where the configuration information includes third indication information, and the third indication information indicates the third bearer corresponding to the primary path corresponding to the first radio bearer.

For the possible implementations of the tenth aspect, refer to the possible implementations of the first aspect.

For technical effects brought by the possible implementations of the tenth aspect, refer to the descriptions of the technical effects of the first aspect or the possible implementations of the first aspect.

According to an eleventh aspect, an embodiment of this application provides a communication apparatus. The communication apparatus has a function of implementing a behavior in the method embodiment in the second aspect. The communication apparatus may be a network device, or may be a component (for example, a processor, a chip, or a chip system) of a network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a first message, where the first message includes first indication information, and the first indication information indicates to configure multi-path transmission for a first radio bearer of first UE and indicates that the first radio bearer is associated with a direct link and an indirect link. The processing module is configured to generate a second message. The transceiver module is further configured to send the second message, where the second message includes second indication information, the second indication information indicates that a primary path corresponding to the first radio bearer is included in a first link, and the first link is a direct link or an indirect link associated with the first radio bearer.

For possible implementations of the eleventh aspect, refer to the possible implementations of the second aspect.

For technical effects brought by the possible implementations of the eleventh aspect, refer to the descriptions of the technical effects of the second aspect or the possible implementations of the second aspect.

According to a twelfth aspect, an embodiment of this application provides a communication apparatus. The communication apparatus has a function of implementing a behavior in the method embodiment in the third aspect. The communication apparatus may be a terminal device, or may be a component (for example, a processor, a chip, or a chip system) of a terminal device, or may be a logical module or software that can implement all or a part of functions of the terminal device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive configuration information of a first radio bearer, where the configuration information indicates first UE to establish a plurality of links to a network device, the plurality of links include a direct link and an indirect link, the configuration information includes third indication information, and the third indication information indicates a primary path corresponding to the first radio bearer. The processing module is configured to establish the plurality of links based on the configuration information.

For possible implementations of the twelfth aspect, refer to the possible implementations of the third aspect.

For technical effects brought by the possible implementations of the twelfth aspect, refer to the descriptions of the technical effects of the third aspect or the possible implementations of the third aspect.

According to a thirteenth aspect, an embodiment of this application provides another communication apparatus. The communication apparatus has a function of implementing a behavior in the method embodiment in the fourth aspect. The communication apparatus may be a network device, or may be a component (for example, a processor, a chip, or a chip system) of a network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a first message. The transceiver module is configured to: send the first message, where the first message includes first indication information, the first indication information indicates to establish a plurality of first channels for a first radio bearer of first UE and indicates that the first radio bearer is associated with a direct link and an indirect link, and the first channel is a data transmission channel between a first network device and a second network device, and is used to carry data of the first radio bearer of the first UE, for example, the first network device is a CU, the second network device is a DU, and the first channel is a GTP-U tunnel; and receive a second message, where the second message includes second indication information, the second indication information indicates that a primary path corresponding to the first radio bearer is included in a second link, and the second link is a direct link or an indirect link.

In a possible implementation, the first indication information indicates that the first radio bearer is associated with one direct link and one indirect link; and the second indication information indicates a link type of the primary path corresponding to the first radio bearer, where the link type is a direct link or an indirect link.

In a possible implementation, the transceiver module is further configured to send configuration information of the first radio bearer to the first UE, where the configuration information includes third indication information, and the third indication information indicates the link type of the primary path corresponding to the first radio bearer.

In a possible implementation, the first indication information indicates that the first radio bearer is associated with one or more first bearers and indicates that the first radio bearer is associated with one or more second bearers. The second indication information indicates a first bearer corresponding to the primary path of the first radio bearer, or the second indication information indicates that the primary path of the first radio bearer corresponds to an indirect link, or the second indication information indicates a second bearer corresponding to the primary path of the first radio bearer, or the second indication information indicates relay UE corresponding to the primary path of the first radio bearer. The first bearer is a transmission resource that is associated with the first radio bearer and that is for the first UE on the direct link, the second bearer is a transmission resource between one or more relay UEs and a network device, the second bearer is used to carry the data of the first radio bearer, and the first UE establishes an indirect link to the network device via the one or more relay UEs.

In a possible implementation, the transceiver module is further configured to send configuration information of the first radio bearer to the first UE, where the configuration information includes third indication information, and the third indication information indicates the first bearer or the second bearer corresponding to the primary path corresponding to the first radio bearer, or the third indication information indicates that the primary path of the first radio bearer corresponds to an indirect link, or the third indication information indicates relay UE corresponding to the primary path of the first radio bearer.

In a possible implementation, the first indication information further indicates a mapping relationship between the first radio bearer and one or more third bearers, or the first indication information further indicates one or more third bearers corresponding to the plurality of GPT-U tunnels, the third bearer is a transmission resource between the first UE and relay UE, and the third bearer is used to carry the data of the first radio bearer.

In a possible implementation, the second indication information indicates a third bearer corresponding to the primary path corresponding to the first radio bearer.

In a possible implementation, the transceiver module is further configured to send configuration information of the first radio bearer to the first UE, where the configuration information includes third indication information, and the third indication information indicates the third bearer corresponding to the primary path corresponding to the first radio bearer.

For the possible implementations of the thirteenth aspect, refer to the possible implementations of the fourth aspect.

For technical effects brought by the possible implementations of the thirteenth aspect, refer to the descriptions of the technical effects of the fourth aspect or the possible implementations of the fourth aspect.

According to a fourteenth aspect, an embodiment of this application provides another communication apparatus. The communication apparatus has a function of implementing a behavior in the method embodiment in the fifth aspect. The communication apparatus may be a network device, or may be a component (for example, a processor, a chip, or a chip system) of a network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a first message, where the first message includes first indication information, the first indication information indicates to establish a plurality of first channels for a first radio bearer of first UE and indicates that the first radio bearer is associated with a direct link and an indirect link, and the first channel is a data transmission channel between a first network device and a second network device, and is used to carry data of the first radio bearer of the first UE, for example, the first network device is a CU, the second network device is a DU, and the first channel is a GTP-U tunnel. The processing module is configured to generate a second message. The transceiver module is further configured to send the second message, where the second message includes second indication information, the second indication information indicates that a primary path corresponding to the first radio bearer is included in a second link, and the second link is a direct link or an indirect link.

For possible implementations of the fourteenth aspect, refer to the possible implementations of the fifth aspect.

For technical effects brought by the possible implementations of the fourteenth aspect, refer to the descriptions of the technical effects of the fifth aspect or the possible implementations of the fifth aspect.

According to a fifteenth aspect, an embodiment of this application provides another communication apparatus. The communication apparatus has a function of implementing a behavior in the method embodiment in the sixth aspect. The communication apparatus may be a network device, or may be a component (for example, a processor, a chip, or a chip system) of a network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a first message. The transceiver module is configured to: send the first message, where the first message includes first indication information, the first indication information indicates to establish a plurality of first channels for a first radio bearer of first UE, the first indication information further indicates that a primary path corresponding to the first radio bearer is on a direct link or an indirect link, or the first indication information further indicates a first channel associated with a primary path corresponding to the first radio bearer, and the first channel is a data transmission channel between a first network device and a second network device, and is used to carry data of the first radio bearer of the first UE, for example, the first network device is a CU, the second network device is a DU, and the first channel is a GTP-U tunnel; and send configuration information of the first radio bearer to the first UE, where the configuration information includes third indication information, and the third indication information indicates the primary path corresponding to the first radio bearer.

In a possible implementation, the transceiver module is further configured to receive a second message, where second indication information in the second message indicates an identifier of a first bearer corresponding to the primary path corresponding to the first radio bearer, or the second indication information indicates that the primary path corresponding to the first radio bearer is associated with an indirect link. The first bearer is a transmission resource that is associated with the first radio bearer and that is for the first UE on the direct link. For example, the first bearer is an RLC bearer.

For the possible implementations of the fifteenth aspect, refer to the possible implementations of the sixth aspect.

For technical effects brought by the possible implementations of the fifteenth aspect, refer to the descriptions of the technical effects of the sixth aspect or the possible implementations of the sixth aspect.

According to a sixteenth aspect, an embodiment of this application provides another communication apparatus. The communication apparatus has a function of implementing a behavior in the method embodiment in the seventh aspect. The communication apparatus may be a network device, or may be a component (for example, a processor, a chip, or a chip system) of a network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a first message, where the first message includes first indication information, the first indication information indicates to establish a plurality of first channels for a first radio bearer, the first indication information further indicates that a primary path corresponding to the first radio bearer is on a direct link or an indirect link, or the first indication information further indicates a first channel associated with a primary path corresponding to the first radio bearer, and the first channel is a data transmission channel between a first network device and a second network device, and is used to carry data of the first radio bearer of the first UE, for example, the first network device is a CU, the second network device is a DU, and the first channel is a GTP-U tunnel. The processing module is configured to determine, based on the first message, to establish the plurality of first channels for the first radio bearer and the primary path corresponding to the first radio bearer.

In a possible implementation, the transceiver module is further configured to send a second message, where second indication information in the second message indicates an identifier of a first bearer corresponding to the primary path corresponding to the first radio bearer, or the second indication information indicates that the primary path corresponding to the first radio bearer is associated with an indirect link. The first bearer is a transmission resource that is associated with the first radio bearer and that is for the first UE on the direct link. For example, the first bearer is an RLC bearer.

For the possible implementations of the sixteenth aspect, refer to the possible implementations of the seventh aspect.

For technical effects brought by the possible implementations of the sixteenth aspect, refer to the descriptions of the technical effects of the seventh aspect or the possible implementations of the seventh aspect.

According to a seventeenth aspect, an embodiment of this application provides another communication apparatus. The communication apparatus has a function of implementing a behavior in the method embodiment in the eighth aspect. The communication apparatus may be a network device, or may be a component (for example, a processor, a chip, or a chip system) of a network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The processing module is configured to generate a first message. The transceiver module is configured to: send the first message, where the first message includes first indication information, the first indication information indicates to configure multi-path transmission for a first radio bearer of first UE and indicates that a primary path corresponding to the first radio bearer is included in a first link, and the first link is a direct link or an indirect link associated with the first radio bearer; and send configuration information of the first radio bearer to the first UE, where the configuration information includes third indication information, and the third indication information indicates the primary path of the first radio bearer.

In a possible implementation, the first indication information indicates that the primary path corresponding to the first radio bearer is included in a direct link; and the transceiver module is further configured to receive a second message, where the second message indicates an RLC bearer corresponding to the primary path corresponding to the first radio bearer.

For the possible implementations of the seventeenth aspect, refer to the possible implementations of the eighth aspect.

For technical effects brought by the possible implementations of the seventeenth aspect, refer to the descriptions of the technical effects of the eighth aspect or the possible implementations of the eighth aspect.

According to an eighteenth aspect, an embodiment of this application provides another communication apparatus. The communication apparatus has a function of implementing a behavior in the method embodiment in the ninth aspect. The communication apparatus may be a network device, or may be a component (for example, a processor, a chip, or a chip system) of a network device, or may be a logical module or software that can implement all or a part of functions of the network device. The function of the communication apparatus may be implemented by hardware, or may be implemented by hardware executing corresponding software. The hardware or the software includes one or more modules or units corresponding to the foregoing function. In a possible implementation, the communication apparatus includes a transceiver module and a processing module. The transceiver module is configured to receive a first message, where the first message includes first indication information, the first indication information indicates to configure multi-path transmission for a first radio bearer of first UE and indicates that a primary path corresponding to the first radio bearer is included in a first link, and the first link is a direct link or an indirect link associated with the first radio bearer. The processing module is configured to determine, based on the first message, to configure multi-path transmission for the first radio bearer and that the primary path corresponding to the first radio bearer is included in the first link.

For possible implementations of the eighteenth aspect, refer to the possible implementations of the ninth aspect.

For technical effects brought by the possible implementations of the eighteenth aspect, refer to the descriptions of the technical effects brought by the ninth aspect or the possible implementations of the ninth aspect.

According to a nineteenth aspect, an embodiment of this application provides another communication apparatus. The communication apparatus includes a processor, the processor is coupled to a memory, the memory is configured to store a program or instructions, and when the program or the instructions are executed by the processor, the communication apparatus is enabled to perform the method according to any one of the first aspect to the ninth aspect.

In this embodiment of this application, in a process of performing the foregoing method, a process of sending information (or a signal) in the foregoing method may be understood as a process of outputting information based on instructions of the processor. When outputting the information, the processor outputs the information to a transceiver, so that the transceiver transmits the information. After the information is output by the processor, other processing may need to be performed on the information before the information reaches the transceiver. Similarly, when the processor receives input information, the transceiver receives the information, and inputs the information into the processor. Further, after the transceiver receives the information, other processing may need to be performed on the information before the information is input into the processor.

An operation like sending and/or receiving related to the processor may be generally understood as an instruction output based on the processor if there is no special description, or if the operation does not conflict with an actual function or internal logic of the operation in related descriptions.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method according to the first aspect or any possible implementation of the first aspect.

In a possible implementation, the memory is located outside the communication apparatus. In a possible implementation, the memory is located inside the communication apparatus.

In a possible implementation, the processor and the memory may alternatively be integrated into one component, that is, the processor and the memory may alternatively be integrated together.

In a possible implementation, the communication apparatus further includes the transceiver. The transceiver is configured to: receive a signal, send a signal, or the like.

According to a twentieth aspect, this application provides a computer-readable storage medium. The computer-readable storage medium stores a computer program, the computer program includes program instructions, and when the program instructions are executed, a computer is enabled to perform the method according to any one of the first aspect to the ninth aspect.

According to a twenty-first aspect, this application provides a computer program product. The computer program product includes a computer program, the computer program includes program instructions, and when the program instructions are executed, a computer is enabled to perform the method according to any one of the first aspect to the ninth aspect.

According to a twenty-second aspect, this application provides a chip, including a processor and a communication interface. The processor reads, through the communication interface, instructions stored in a memory, to perform the method according to any one of the first aspect to the ninth aspect.

According to a twenty-third aspect, this application provides a communication system, including the communication apparatus according to the tenth aspect or any one of the possible implementations of the tenth aspect, the communication apparatus according to the eleventh aspect or any one of the possible implementations of the eleventh aspect, and the communication apparatus according to the twelfth aspect or any one of the possible implementations of the twelfth aspect.

According to a twenty-fourth aspect, this application provides a communication system, including the communication apparatus according to the twelfth aspect or any one of the possible implementations of the twelfth aspect, the communication apparatus according to the thirteenth aspect or any one of the possible implementations of the thirteenth aspect, and the communication apparatus according to the fourteenth aspect or any one of the possible implementations of the fourteenth aspect.

According to a twenty-fifth aspect, this application provides a communication system, including the communication apparatus according to the twelfth aspect or any one of the possible implementations of the twelfth aspect, the communication apparatus according to the fifteenth aspect or any one of the possible implementations of the fifteenth aspect, and the communication apparatus according to the sixteenth aspect or any one of the possible implementations of the sixteenth aspect.

According to a twenty-sixth aspect, this application provides a communication system, including the communication apparatus according to the twelfth aspect or any one of the possible implementations of the twelfth aspect, the communication apparatus according to the seventeenth aspect or any one of the possible implementations of the seventeenth aspect, and the communication apparatus according to the eighteenth aspect or any one of the possible implementations of the eighteenth aspect.

According to a twenty-seventh aspect, this application provides another communication apparatus. The communication apparatus includes a processing circuit and an interface circuit. The interface circuit is configured to obtain data or output data. The processing circuit is configured to perform the method according to any one of the first aspect to the ninth aspect.

### BRIEF DESCRIPTION OF DRAWINGS

To describe the technical solutions in embodiments of this application or in the background more clearly, the following describes the accompanying drawings for describing embodiments of this application or the background.
FIG. 1A and FIG. 1B are diagrams of multi-path relay communication scenarios according to an embodiment of this application;
FIG. 2 is a diagram of a communication architecture of U2N relay;
FIG. 3A shows a user plane (user plane) of a protocol stack of L2 U2N relay;
FIG. 3B shows a control plane (control plane) of a protocol stack of L2 U2N relay;
FIG. 4 shows a routing process of downlink data of remote UE;
FIG. 5 shows a multi-path relay communication scenario;
FIG. 6A is a diagram of an architecture of a sidelink connection-based multi-path relay protocol stack;
FIG. 6B shows an architecture of a protocol stack when remote UE and relay UE are connected to each other by using non-3GPP;
FIG. 7A is a diagram of a CU-DU split architecture;
FIG. 7B shows an example of a protocol stack of a CU-DU split architecture;
FIG. 8A shows an architecture of a user plane protocol stack of an L2 U2N relay protocol stack in a CU-DU split architecture;
FIG. 8B shows an architecture of a control plane protocol stack of an L2 U2N relay protocol stack in a CU-DU split architecture;
FIG. 9 is an interaction flowchart of a communication method according to an embodiment of this application;
FIG. 10 is an interaction flowchart of another communication method according to an embodiment of this application;
FIG. 11 is an interaction flowchart of another communication method according to an embodiment of this application;
FIG. 12A is an interaction flowchart of another communication method according to an embodiment of this application;

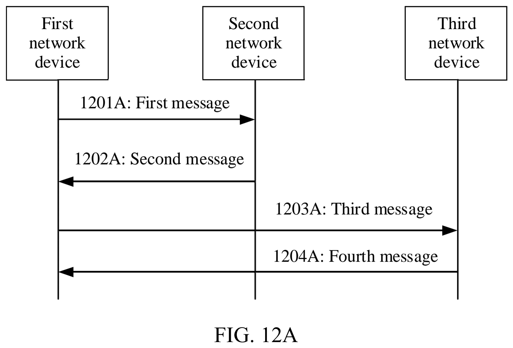

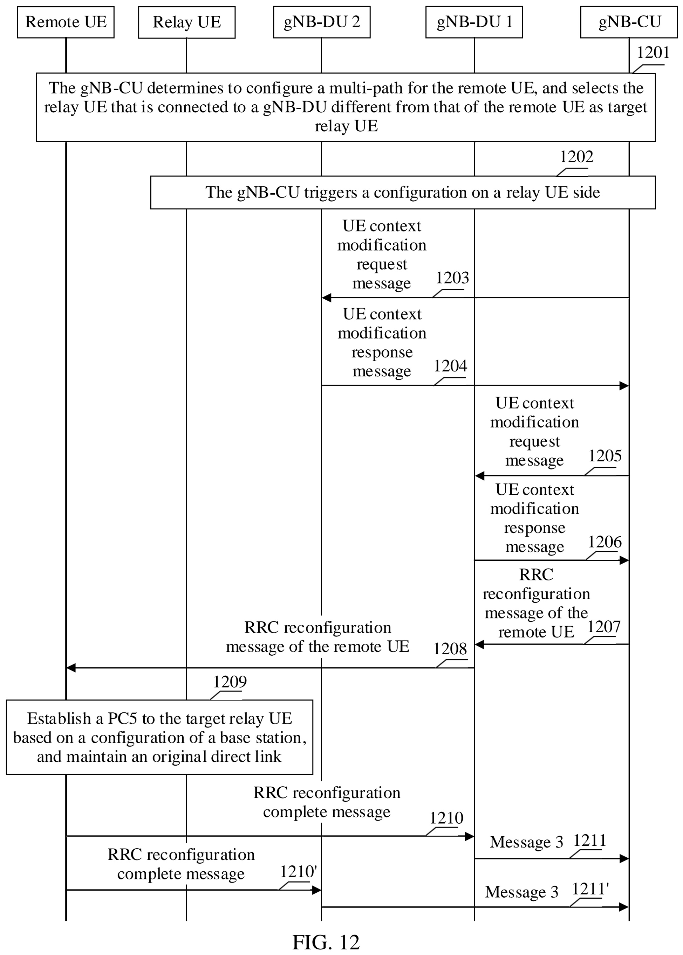

FIG. 12 is an interaction flowchart of another communication method according to an embodiment of this application;

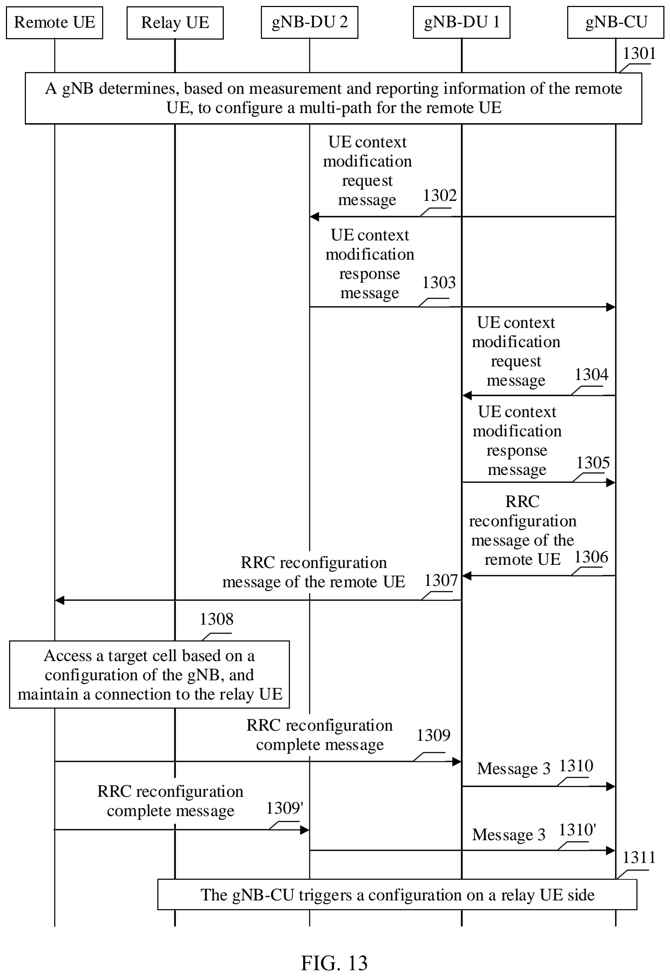

FIG. 13 is an interaction flowchart of another communication method according to an embodiment of this application;

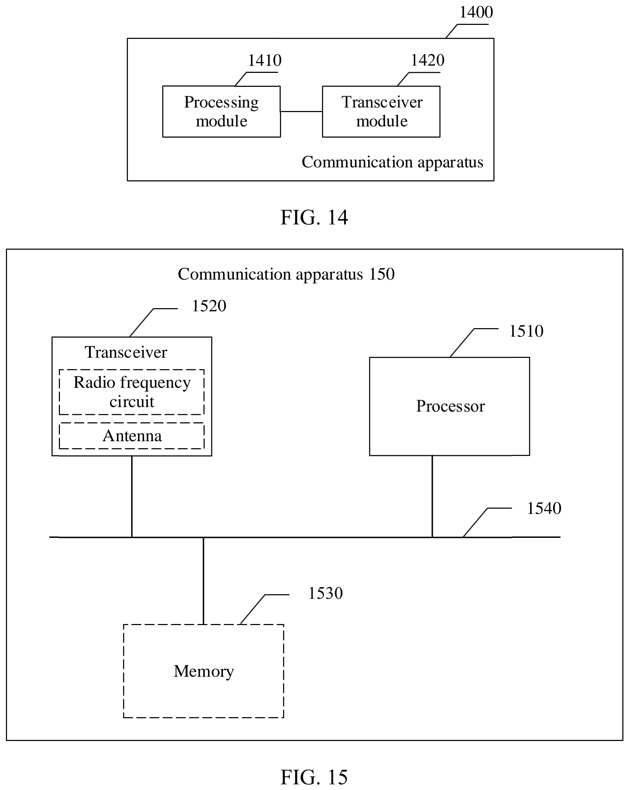

FIG. 14 is a diagram of a structure of a communication apparatus 1400 according to an embodiment of this application;
FIG. 15 is a diagram of a structure of another communication apparatus 150 according to an embodiment of this application; and

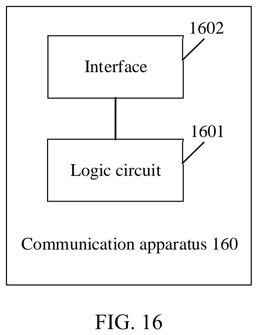

FIG. 16 is a diagram of a structure of another communication apparatus 160 according to an embodiment of this application.

### DESCRIPTION OF EMBODIMENTS

Terms such as "first" and "second" in the specification, claims, and accompanying drawings of this application are merely used to distinguish between different objects, but are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

An "embodiment" mentioned in this specification means that a particular feature, structure, or characteristic described with reference to this embodiment may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with another embodiment.

Terms used in the following embodiments of this application are merely intended to describe specific embodiments, but are not intended to limit this application. As used in this specification and the claims of this application, a singular expression form like "one", "a", "said", "foregoing", "the", or "this" is intended to also include a plural expression form, unless clearly indicated to the contrary in the context. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more.

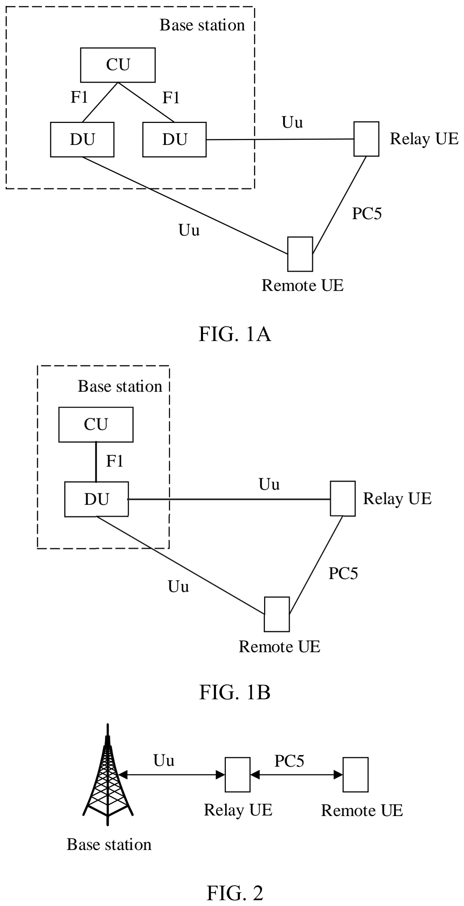

FIG. 1A and FIG. 1B are diagrams of multi-path relay (multi-path relay) communication scenarios according to an embodiment of this application. As shown in FIG. 1A and FIG. 1B, a base station (for example, a gNB) includes two parts: a CU and a DU. The CU and the DU are connected to each other through an F1 interface, and one CU may be connected to one or more DUs. One or more link connections may be established between remote UE and the base station. For example, the remote UE may be connected to the base station through both a Uu link (a direct link) and a relay link (or an indirect link). The relay link includes a PC5 link (corresponding to a PC5 relay RLC channel) between the remote UE and relay UE, and a Uu link (corresponding to a Uu relay RLC channel) between the relay UE and a gNB-DU. In an inter-gNB-DU scenario, the remote UE and the relay UE are connected to different gNB-DUs of one gNB-CU (as shown in FIG. 1A). In an intra-gNB-DU scenario, the remote UE and the relay UE are connected to a same gNB-DU (as shown in FIG. 1B).

In different systems, the CU (including a CU-CP and a CU-UP) or the DU may also have different names, but a person skilled in the art may understand meanings thereof. For example, in an open radio access network (open radio access network, O-RAN) system, a CU may also be referred to as an O-CU (open CU), a DU may also be referred to as an O-DU, a CU-CP may also be referred to as an O-CU-CP, and a CU-UP may also be referred to as an O-CU-UP. For ease of description, the CU, the CU-CP, the CU-UP, and the DU are used as examples for description in this application.

It should be understood that the multi-path relay communication scenarios shown in FIG. 1A and FIG. 1B are merely diagrams. The communication scenario may further include another network device, for example, may further include a wireless relay device, a wireless backhaul device, a core network device, a radio access network device, and the like that are not shown in FIG. 1A and FIG. 1B. It should be noted that a link between the remote UE and the relay UE is not limited to a sidelink, and the link between the remote UE and the relay UE may alternatively be an ideal non-3GPP link or another link. In addition, a link between the relay UE and the gNB-DU may alternatively be a link other than the Uu link. This is not limited in this application. The multi-path relay communication scenarios shown in FIG. 1A and FIG. 1B are merely examples of multi-path relay communication scenarios. The communication solution provided in this application is applicable to another multi-path relay communication scenario, for example, a scenario in which the remote UE communicates with a network device through more than two links, or a scenario in which the remote UE communicates with a network device through a multi-hop relay link.

The base station is a radio access network (radio access network, RAN) node or device that connects UE to a wireless network, and may also be referred to as an access network device. The base station is connected to an evolved packet core (evolved packet core, EPC) or a 5G core network (5G core network, 5GC). The base station may be, for example, a NodeB NodeB, an evolved NodeB eNodeB, a base station in a 5G mobile communication system, a base station in a future mobile communication system, an access node in a Wi-Fi system, an eNB, a gNB, or an ng-eNB.

UE is also referred to as a terminal, a mobile station (mobile station, MS), a mobile terminal (mobile terminal, MT), or the like, and is a device that provides voice and/or data connectivity for a user. In this application, the UE is especially a device that can perform sidelink communication. The UE may be classified into two types: relay UE, that is, UE that supports providing a relay service; and remote UE, that is, UE that supports accessing a base station by using a relay service. The remote UE may access a base station via the relay UE.

The foregoing network elements may be network elements implemented on dedicated hardware, software instances run on dedicated hardware, or instances of virtualization functions on a proper platform. In addition, embodiments of this application are also applicable to another future-oriented communication technology. Network architectures and service scenarios described in this application are intended to describe the technical solutions in this application more clearly, and do not constitute a limitation on the technical solutions provided in this application. A person of ordinary skill in the art may learn that, with evolution of network architectures and emergence of new service scenarios, the technical solutions provided in this application are also applicable to similar technical problems.

For ease of understanding embodiments of this application, the following first briefly describes terms and technical features in embodiments of this application.

Sidelink (sidelink)/sidelink (sidelink) communication: In a wireless communication system, UEs may perform data communication with each other via a network device, or may perform communication with each other without a network device. An interface between the UEs is referred to as a PC5 interface, and is similar to a Uu interface between the UE and a base station. A link between the UEs is referred to as a sidelink. A typical application scenario of sidelink communication is vehicle-to-everything (vehicle-to-everything, V2X). In the vehicle-to-everything, each vehicle is one UE, and UEs may directly perform data transmission with each other through a sidelink but not over a network. In this way, a communication delay can be effectively reduced. The sidelink supports broadcast, unicast, and multicast. One unicast communication on the sidelink corresponds to a pair of identifiers: a source layer-2 identifier (source layer-2 identifier, source L2 ID) and a destination layer-2 identifier (destination layer-2 identifier, destination L2 ID). A subheader of each sidelink media access control protocol data unit (media access control protocol data unit, MAC PDU) includes the source L2 ID and the destination L2 ID, so that data can be transmitted from a transmit end to a correct receive end.

Radio bearer (radio bearer, RB): The radio bearer is a generic term for a series of protocol entities and configurations allocated by a base station to UE, and is a service that is provided by a layer 2 (Layer-2, L2 for short) and that is used to transmit user data between the UE and the base station, including a series of resources allocated to a PDCP protocol entity, an RLC protocol entity, a MAC protocol entity, and a physical layer (physical layer, PHY). Radio bearers are classified into a DRB and an SRB. The DRB is used to carry data, and the SRB is used to carry signaling. In a sidelink communication scenario, UEs communicate with each other through a sidelink radio bearer (sidelink radio bearer, SLRB), including a sidelink data radio bearer (namely, an SL DRB) and a sidelink signaling radio bearer (namely, an SL SRB). In the protocol text, the radio bearer configuration generally includes only configurations at a PDCP layer and a service data adaptation protocol (service data adaptation protocol, SDAP) layer. A protocol entity below an RLC layer is referred to as an RLC bearer, and a corresponding configuration is provided in an RLC bearer configuration.

RLC bearer (RLC bearer): The RLC bearer is a protocol entity and configuration below an RLC layer, is a lower-layer part of a radio bearer, and includes a series of resources such as an RLC protocol entity and a logical channel. One RLC bearer is associated with one logical channel at a MAC layer. One RLC bearer is associated with one PDCP entity, that is, one RLC serves one radio bearer.

UE-to-network relay (UE-to-Network Relay): Sidelink UE-to-network relay (SL U2N Relay) is a technology in which one UE helps another UE communicate with a base station, and is also referred to as a relay (Relay) technology. FIG. 2 is a diagram of a communication architecture of U2N relay. As shown in FIG. 2, remote UE communicates with a base station (for example, a gNB/NG-RAN in FIG. 2) through cooperation of relay UE. The remote UE communicates with the relay UE through a sidelink, and a corresponding interface is referred to as a PC5. The relay UE is directly connected to the base station, that is, communicates with the base station through a Uu interface.

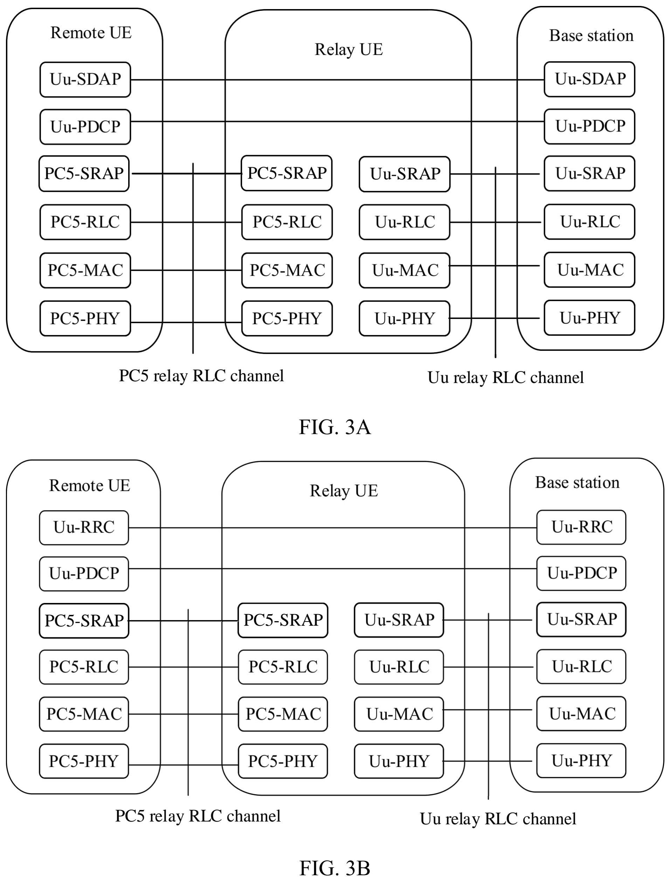

Existing U2N relay technologies mainly have two designs: a layer-2 design and a layer-3 (Layer-3, L3 for short) design. This application is mainly for a protocol architecture of L2 U2N relay. Therefore, only the L2 U2N relay is described herein. FIG. 3A shows a user plane (user plane) of a protocol stack of the L2 U2N relay. FIG. 3B shows a control plane (control plane) of a protocol stack of the L2 U2N relay. As shown in FIG. 3A and FIG. 3B, a data packet of remote UE is forwarded in a relay manner below a PDCP layer of relay UE. In other words, the relay UE maintains only an RLC bearer for relaying, including an RLC layer, a MAC layer, and a PHY layer. In other words, there are a peer-to-peer PDCP layer, a peer-to-peer SDAP layer, and a peer-to-peer radio resource control (radio resource control, RRC) layer between the remote UE and a base station, but there is no peer-to-peer RLC layer, peer-to-peer MAC layer, or peer-to-peer PHY layer between the remote UE and the base station.

In addition, in the protocol architecture of the L2 U2N relay, an SRAP layer is added between the RLC layer and the PDCP layer. The SRAP layer (or referred to as an adaptation layer) is mainly used for multiplexing and demultiplexing of a radio bearer, that is, supporting multiplexing of different peer-to-peer radio bearers onto one RLC bearer and a corresponding demultiplexing process. An RLC bearer between the remote UE and the relay UE may be referred to as a PC5 relay RLC channel/bearer, and an RLC bearer between the relay UE and the base station may be referred to as a Uu relay RLC channel/bearer. Through multiplexing, different radio bearers of one remote UE may be multiplexed on one PC5 relay RLC channel. Alternatively, in a scenario in which one relay UE is connected to a plurality of remote UEs, different radio bearers of the one or more remote UEs may be multiplexed on one Uu relay RLC channel.

During downlink transmission, an SRAP layer of the base station may multiplex data of a plurality of radio bearers of the one or more remote UEs onto one Uu relay RLC bearer. On a sidelink of each remote UE, data of one or more radio bearers of the remote UE may be mapped to one PC5 relay RLC bearer. Similarly, in an uplink direction, an SRAP layer of the remote UE may map data of a plurality of radio bearers of the remote UE to one PC5 relay RLC bearer. An adaptation layer of the relay UE may multiplex data of different radio bearers of the one or more remote UEs onto one Uu relay RLC bearer, to implement bearer multiplexing.

To distinguish between data of different remote UEs, the base station allocates one remote UE ID, also referred to as a local identifier (local ID), to each remote UE, and includes the ID in a data packet routing process, to indicate remote UE to which the data belongs. The existing 3GPP protocol determines that a local ID of remote UE is allocated by a base station serving relay UE, and the allocated local ID may be unique under the base station or unique under the relay UE.

Before data transmission, the base station performs SRAP configuration on the remote UE and the relay UE for data routing. The SRAP configuration may include a mapping relationship between a radio bearer ID (an RB ID, including an SRB ID/DRB ID) of the remote UE and a Uu relay RLC channel/PC5 relay RLC channel. Specifically, the base station configures, for the remote UE, a mapping relationship between a radio bearer (an SRB or a DRB) and a PC5 relay RLC channel, and configures, for the relay UE, a local ID of the remote UE and a mapping relationship between a radio bearer of the remote UE and a Uu/PC5 relay RLC channel. When sending uplink or downlink data, the remote UE or the base station includes the local ID and the RB ID of the remote UE in an SRAP header. Based on the SRAP configuration, the data of the remote UE can be correctly forwarded in a relay manner via the relay UE.

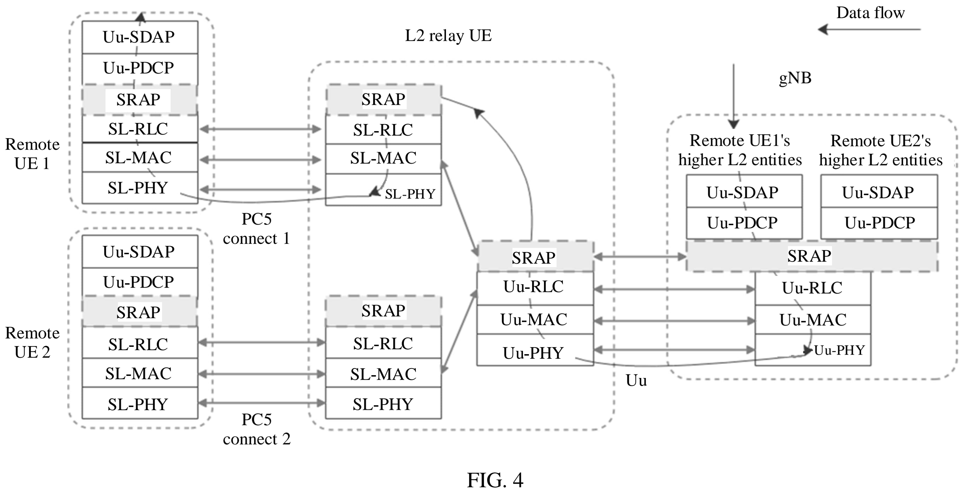

In an example, FIG. 4 shows a routing process of downlink data of remote UE. An SRAP layer of a base station receives a PDCP PDU of remote UE 1 from a PDCP layer, includes a local ID and ID information of a radio bearer (an SRB or a DRB) of the remote UE 1 in an SRAP header, and delivers the PDCP PDU to a Uu relay RLC channel based on a mapping relationship configuration. After receiving a data packet from the Uu relay RLC channel, an adaptation layer of relay UE may deliver the data packet to a correct PC5 relay RLC channel based on a mapping relationship configured by the base station. After receiving the data packet from the PC5 relay RLC channel, the remote UE delivers, based on the bearer ID information in the SRAP header, the data packet to a corresponding PDCP layer for processing. A data transmission process in an uplink direction is similar to that in the downlink direction, and details are not described herein again.

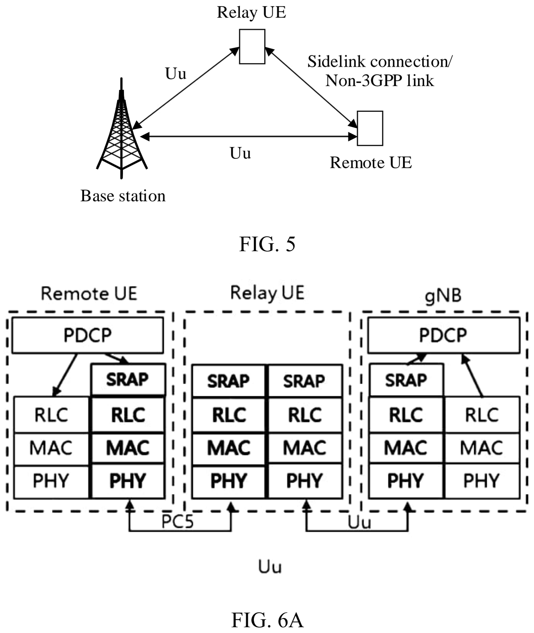

Multi-path relay (multi-path relay): As an evolution of the UE-to-network relay, 3GPP researches a multi-path relay solution in R18. FIG. 5 shows a multi-path relay communication scenario. As shown in FIG. 5, remote UE communicates with a base station through both a direct link and an indirect link. On the direct link, the remote UE directly communicates with the base station through a Uu interface. On the indirect link, the remote UE communicates with the base station via relay UE. The remote UE and the relay UE may be connected to each other through a sidelink, or may be connected to each other through an ideal non-3GPP link. The remote UE receives or sends same data or different data through the two links, to improve a throughput and reliability of data receiving and sending. Therefore, a radio bearer (an SRB or a DRB) of the remote UE may be configured in four manners: configured only on a direct link, configured only on an indirect link, configured with multi-path transmission + PDCP duplication, or configured with multi-path transmission + PDCP split (split). In a first case, corresponding data of the radio bearer of the remote UE is transmitted only through the direct link. In a second case, corresponding data of the radio bearer of the remote UE is transmitted only through the indirect link. In a third case, data of the radio bearer of the remote UE is replicated at a PDCP layer, and then same data is transmitted through both a direct link and an indirect link. In a fourth case, data of the radio bearer of the remote UE is transmitted on any link based on an implementation or a configuration.

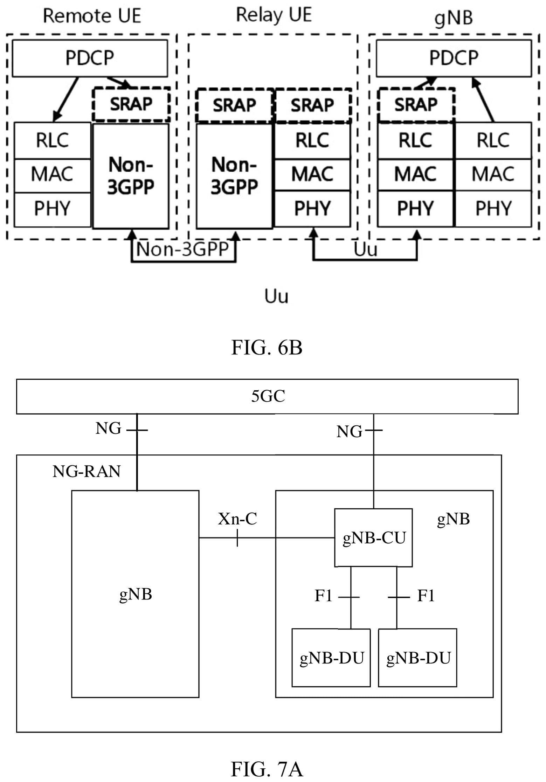

FIG. 6A is a diagram of an architecture of a sidelink connection-based multi-path relay protocol stack. As shown in FIG. 6A, remote UE and relay UE are connected to each other through a sidelink, and a protocol stack for direct communication between the remote UE and a base station is added based on an architecture of an R17 L2 U2N relay protocol stack (refer to FIG. 3A and FIG. 3B). FIG. 6B shows an architecture of a protocol stack when remote UE and relay UE are connected to each other by using non-3GPP. As shown in FIG. 6B, there may be an SRAP layer between the remote UE and the relay UE and an SRAP layer between the relay UE and a base station, or there may be no SRAP layer between the remote UE and the relay UE and no SRAP layer between the relay UE and the base station. Selection may be performed based on a bearer multiplexing requirement of the remote UE.

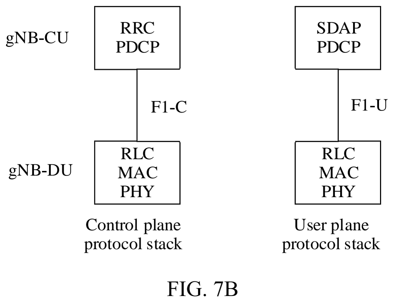

CU-DU split architecture: In the CU-DU split architecture, a base station is divided into a CU and a DU. For example, one gNB may be divided into one gNB-CU and one or more gNB-DUs. The DU is mainly responsible for an RLC/MAC/PHY protocol function on a base station side. A distributed unit in a gNB is referred to as a gNB-DU. A distributed unit in an ng-eNB is referred to as an ng-eNB-DU. The CU is mainly responsible for an RRC/SDAP/PDCP protocol function on the base station side. The CU is connected to the DU through an F 1 interface. A central unit in a gNB is referred to as a gNB-CU. A central unit in an ng-eNB is referred to as an ng-eNB-CU. The gNB-CU and the gNB-DU are connected to each other through an F 1 interface. One gNB-DU can be connected to only one gNB-CU. FIG. 7A is a diagram of a CU-DU split architecture. FIG. 7B shows an example of a protocol stack of a CU-DU split architecture. In FIG. 7A, a next generation radio access network (next generation radio access network, NG-RAN) includes a series of gNB base stations connected to a 5G core network. The gNB is connected to the 5G core network through an NG interface, and the gNBs are connected to each other through an Xn interface. Refer to FIG. 7B. In the CU-DU split architecture, a gNB-CU is responsible for RRC, SDAP, and PDCP protocol layers, and a gNB-DU is responsible for RLC, MAC, and PHY protocol layers. Further, for a control plane, a gNB-CU-CP (control plane) is responsible for PDCP entities corresponding to RRC and an SRB. For a user plane, a gNB-CU-UP (user plane) is responsible for PDCP entities corresponding to an SDAP and a DRB.

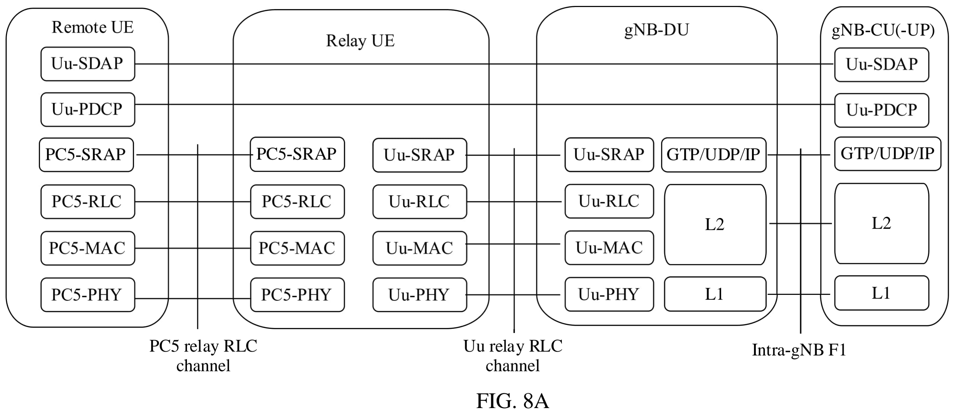

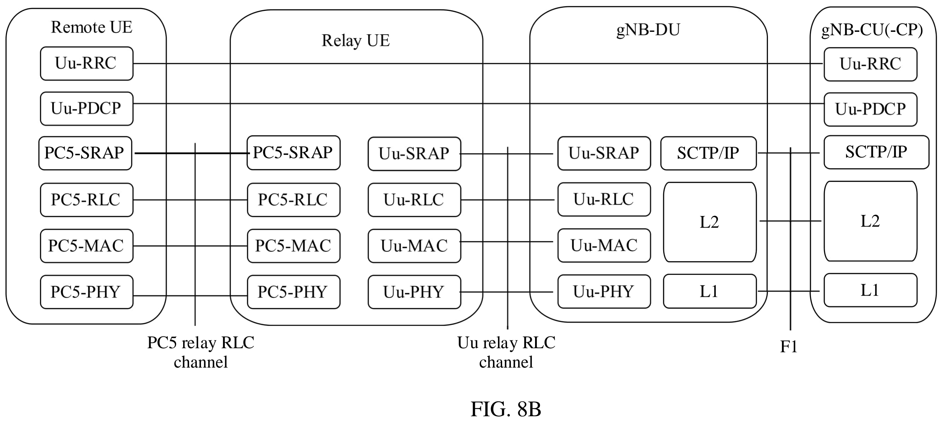

A current protocol also supports the R17 SL relay in a CU-DU split architecture. A protocol stack of the R17 SL relay is shown in FIG. 8A and FIG. 8B. FIG. 8A shows an architecture of a user plane protocol stack of an L2 U2N relay protocol stack in a CU-DU split architecture. FIG. 8B shows an architecture of a control plane protocol stack of an L2 U2N relay protocol stack in a CU-DU split architecture. The L2 U2N relay protocol stack in the CU-DU split architecture mainly has the following design principles: An SRAP is located on a DU side. A gNB-CU determines a mapping relationship configuration at the SRAP layer. A gNB-DU determines a configuration of a PC5/Uu relay RLC channel based on an indication of the gNB-CU. The gNB-CU allocates a local ID of the remote UE, performs SRAP layer configuration and PC5 relay RLC channel configuration for the remote UE based on an FlAP message of the remote UE (that is, the message carries an identifier on an F1 interface (FlAP ID) of the remote UE, and the message is used to generate a related configuration of the remote UE), and performs SRAP layer configuration and PC5/Uu relay RLC channel configuration for the relay UE based on an FIAP message of the relay UE (that is, the message carries an identifier on an F1 interface of the relay UE, and the message is used to generate a related configuration of the relay UE).

In an R17 SL U2N relay communication scenario, only an indirect link through which remote UE communicates with a base station via relay UE is established, and a solution of how the remote UE establishes two links (one direct link and one indirect link) to communicate with the base station is not disclosed. In an R18 multi-path relay communication scenario, configuring multi-path transmission can increase efficiency of transmission of data of a radio bearer of remote UE. However, a procedure in R17 does not disclose how to configure multi-path transmission for the radio bearer of the remote UE and configure PDCP duplication or PDCP split.

This application mainly considers how to configure multi-path transmission in a CU-DU split architecture in the R18 multi-path relay communication scenario, that is, when the remote UE communicates with a base station through a direct link and an indirect link. In this application, two scenarios: an inter-gNB-DU scenario and an intra-gNB-DU scenario are considered. To be specific, the remote UE is connected to a gNB-CU via one gNB-DU or two different gNB-DUs. With reference to the accompanying drawings, the following describes a communication solution, provided in this application, in which multi-path transmission is configured when remote UE communicates with a base station through a direct link and an indirect link.

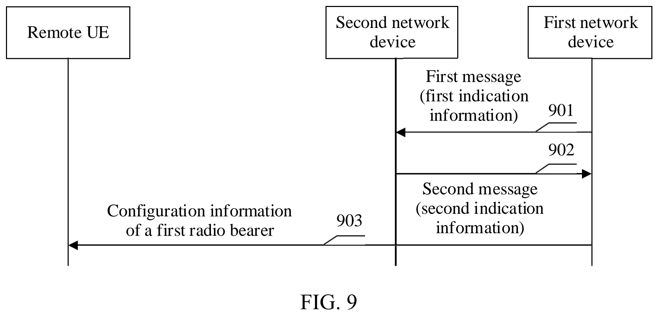

FIG. 9 is an interaction flowchart of a communication method according to an embodiment of this application. As shown in FIG. 9, the method includes the following steps.

901: A first network device sends a first message to a second network device.

Correspondingly, the second network device receives the first message from the first network device. The first network device and the second network device may be two independent network devices, or may be two associated network devices. For example, the first network device is a gNB-CU, and the second network device is a gNB-DU. The gNB-CU is an example of a CU of a base station, and the gNB-CU may be replaced with an ng-eNB-CU. The gNB-DU is an example of a DU of a base station, and the gNB-DU may be replaced with an ng-eNB-DU. It may be understood that the gNB-CU and the gNB-DU may be replaced with a CU and a DU that are obtained by dividing any base station in a CU-DU split architecture. This is not limited in this application. The gNB-CU and the gNB-DU are connected to each other through an F1 interface. In other words, the gNB-DU is connected to the gNB-CU through an F1 interface. In other words, the gNB-CU is associated with the gNB-DU. That the gNB-CU sends the first message to the gNB-DU may be that the gNB-CU sends the first message to a gNB-DU associated with the gNB-CU.

The first message includes first indication information. The first indication information indicates to configure multi-path transmission for a first radio bearer of first UE (referred to as remote UE below) and indicates that the first radio bearer is associated with a direct link and an indirect link. In other words, the first indication information indicates to configure PDCP duplication for the first radio bearer of the remote UE and indicates that the first radio bearer is associated with the direct link and the indirect link. The first radio bearer may be an SRB, or may be a DRB. For example, the first indication information indicates that the first radio bearer is associated with a first bearer and a second bearer, the first bearer is a transmission resource that is associated with the first radio bearer and that is for the first UE on the direct link, the second bearer is a transmission resource between first relay UE and a network device, the second bearer is used to carry data of the first radio bearer, and the first UE establishes the indirect link to the network device via the first relay UE. For example, the first bearer is an RLC bearer, and the second bearer is a Uu relay RLC channel or a PC5 relay RLC channel on the indirect link.

For another example, the first indication information indicates a quantity of first bearers associated with the first radio bearer, and indicates whether the first radio bearer is associated with a second bearer. For example, the first bearer is an RLC bearer, and the second bearer is the indirect link, a Uu relay RLC channel, or a PC5 relay RLC channel.

For another example, the first indication information indicates a quantity of first bearers associated with the first radio bearer, and indicates that the first radio bearer is associated with a second bearer. Optionally, two pieces of indication sub-information are used to respectively indicate the quantity of first bearers associated with the first radio bearer and the second bearer associated with the first radio bearer. For example, the first bearer is an RLC bearer, and the second bearer is a Uu relay RLC channel or a PC5 relay RLC channel on the indirect link.

For another example, the first indication information indicates that the first radio bearer is associated with one or more first bearers and one or more second bearers. The first indication information may further indicate a total quantity of first bearers and second bearers that are associated with the first radio bearer. For example, the first bearer is an RLC bearer, and the second bearer is a Uu relay RLC channel or a PC5 relay RLC channel on the indirect link. Optionally, two pieces of indication sub-information are used to respectively indicate the first bearer associated with the first radio bearer and the second bearer associated with the first radio bearer.

For another example, the first indication information indicates that the first radio bearer is associated with a plurality of second bearers. The first indication information may further indicate a quantity of second bearers associated with the first radio bearer. For example, the second bearer is a Uu relay RLC channel or a PC5 relay RLC channel on the indirect link.

For another example, the first indication information indicates to establish an RLC entity and a second bearer for the first radio bearer. The first indication information further indicates a quantity of RLC entities and second bearers established for the first radio bearer. For example, the second bearer is a Uu relay RLC channel or a PC5 relay RLC channel on the indirect link.

For another example, the first indication information indicates that the first radio bearer is associated with a plurality of non-3GPP links. The first indication information may further indicate a quantity of non-3GPP links associated with the first radio bearer. For example, the non-3GPP link is.

The first message may be a UE context modification (update) request (UE CONTEXT MODIFICATION REQUEST) message, or may be another message. This is not limited in this application. In this embodiment of this application, an example in which the first message is a UE context modification request message is used for description. The UE context modification request message indicates the second network device to update a UE context of the remote UE. The UE context modification request message includes setup or update indication information of the first radio bearer of the remote UE (namely, the remote UE), for example, a to be set up/modified list (to be setup/modified list) of the first radio bearer, and the first indication information. In a possible implementation, the UE context modification request message further indicates to configure a PC5 relay RLC channel for the remote UE.

In a possible implementation, the first message further includes fourth indication information, and the fourth indication information indicates to maintain an original direct link of the remote UE when an indirect link is added for the remote UE. The fourth indication information may be referred to as relay UE addition indication information or multi-path addition indication information. The fourth indication information may include information required for adding the indirect link, for example, at least one of an identifier of relay UE, a local identifier (local ID) of the remote UE, or timer information. The relay UE corresponds to the indirect link that needs to be established for the remote UE. The timer information is used by the remote UE to determine whether a link failure occurs on an indirect link of the remote UE. The local identifier of the remote UE is an identifier allocated by the network device (for example, the gNB-CU) to the remote UE. The timer information is applied to an indirect link, and may be denoted as a timer T1. The fourth indication information may further include a timer T2 applied to a direct link. The following further describes application of the timer T1 and the timer T2. In this implementation, the fourth indication information can be used to maintain the original direct link of the remote UE when the indirect link is added for the remote UE, to configure multi-path transmission. Therefore, correspondingly, the second network device provides low-layer configuration information on the direct link and the indirect link based on an indication of the first network device. The fourth indication information (or the first message) may further indicate an update configuration of the indirect link. For the remote UE, in addition to the configuration required for adding the indirect link, the configuration for adding the indirect link for the remote UE further includes the update configuration of the indirect link.

In a possible implementation, the first message further includes fourth indication information, and the fourth indication information indicates to maintain an original indirect link of the remote UE or still communicate with a base station through an original indirect link when a direct link is added for the remote UE. The fourth indication information may carry an identifier of relay UE corresponding to the original indirect link that is of the remote UE and that needs to be maintained. In this implementation, the fourth indication information can be used to maintain the original direct link of the remote UE when the indirect link is added for the remote UE, to configure multi-path transmission.

In a scenario in which only one relay UE is configured, a first network device side and a second network device side maintain an association relationship between the remote UE and the relay UE. The first network device side and the second network device side are associated with each other, and jointly maintain the association relationship between the remote UE and the relay UE. For example, the first network device is a gNB-CU, and the second network device is a gNB-DU associated with the gNB-CU. Therefore, the Uu relay RLC channel or the PC5 relay RLC channel indicated by the first network device in the first indication information corresponds to the relay UE. If the first network device determines to configure a plurality of relay UEs for the remote UE, that is, configure a plurality of indirect links, the first network device further indicates ID information of relay UE, to indicate that the indicated Uu relay RLC channel is a transmission resource that is between relay UE indicated by the second network device and a network device side (namely, a gNB-CU side and/or a gNB-DU side), or indicate that the indicated PC5 relay RLC channel is configured on a sidelink between the remote UE and indicated relay UE. The ID of the relay UE may be ID information that is of the relay UE on an F1 interface and that is allocated by the first network device or the second network device, for example, an F1AP ID, an L2 ID of the relay UE, or a cell radio network temporary identifier (cell radio network temporary identifier, C-RNTI) of the relay UE, or a temporary identifier allocated by the remote UE to the relay UE. The first message may include the ID of the relay UE, to indicate that the Uu relay RLC channel is a transmission resource between relay UEs indicated by the second network device, or the PC5 relay RLC channel is configured on a sidelink between the remote UE and the indicated relay UE.

In a possible implementation, the first message may further include first sidelink indication information, and the first sidelink indication information includes identification information of the remote UE on a sidelink and/or identification information of the first relay UE on a sidelink.

902: The second network device sends a second message to the first network device.

Correspondingly, the first network device receives the second message from the second network device. The second message includes second indication information, the second indication information indicates that a primary path corresponding to the first radio bearer is included in a first link, and the first link is a direct link or an indirect link associated with the first radio bearer. The following describes implementations of the first indication information and the second indication information in detail. The second message may be a UE context modification (update) response (UE CONTEXT MODIFICATION RESPONSE) message, or may be another message. This is not limited in this application. In this embodiment of this application, an example in which the second message is a UE context modification response message is used for description. The primary path is used to control a data transmission process when multi-path transmission is configured for the first radio bearer. In an example, when PDCP split or deactivated PDCP duplication is configured for the first radio bearer, data of the first radio bearer is constantly transmitted on the primary path.

The second message may further include low-layer configuration information of the remote UE. The low-layer configuration information of the remote UE may include a configuration of an RLC bearer and a configuration of a PC5 relay RLC channel. It may be understood that the second network device may provide the low-layer configuration information of the remote UE for the first network device based on the first message from the first network device. In addition, the low-layer configuration information may further include the fourth indication information that is to be included in an RRC configuration (that is, configuration information of the first radio bearer below) sent by the first network device to the UE.

In a possible implementation, the second message may further include resource configuration information of the remote UE on the sidelink.

903: The first network device sends the configuration information of the first radio bearer to the remote UE.

The configuration information of the first radio bearer includes third indication information. The third indication information indicates the primary path corresponding to the first radio bearer. For example, the configuration information of the first radio bearer may be radio bearer configuration information determined by the first network device for the remote UE. Step 903 is optional. The following further describes, with reference to the first indication information and the second indication information, an implementation in which the third indication information indicates the primary path corresponding to the first radio bearer. Details are not described herein now. That the first network device sends the configuration information of the first radio bearer to the remote UE may be that the first network device sends the configuration information of the first radio bearer to the remote UE via the second network device. In other words, the second network device forwards the configuration information of the first radio bearer from the first network device to the remote UE.

In this embodiment of this application, the first indication information indicates to configure multi-path transmission for the first radio bearer of the remote UE and indicates that the first radio bearer is associated with the direct link and the indirect link, so that the second network device determines whether the primary path corresponding to the first radio bearer is included in the direct link or the indirect link. The second network device sends the second message to indicate that the primary path corresponding to the first radio bearer is included in the first link, so that a problem of how to configure multi-path transmission for a radio bearer in a multi-path relay communication scenario can be resolved.

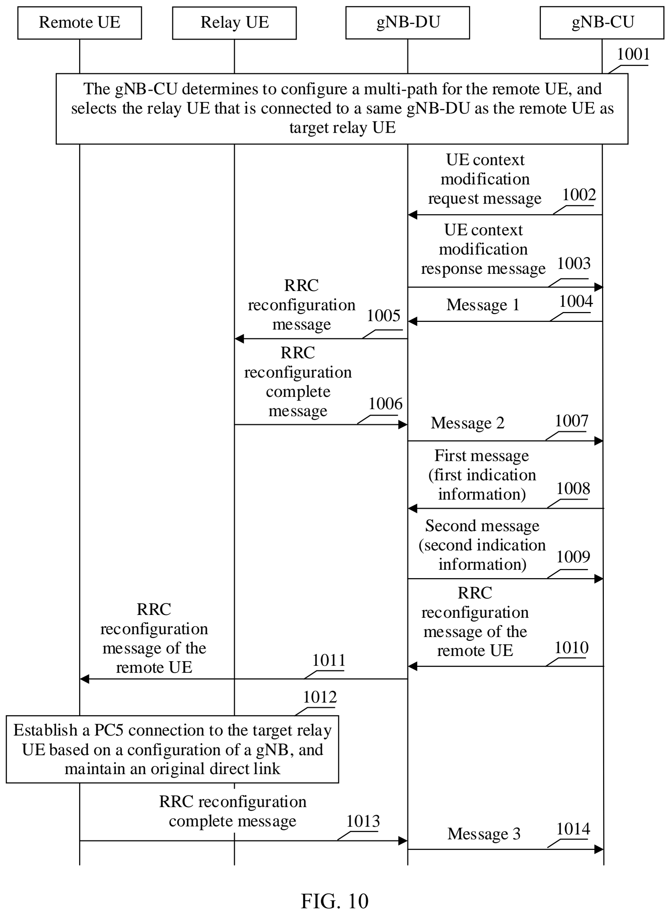

FIG. 10 is an interaction flowchart of another communication method according to an embodiment of this application. A method procedure in FIG. 10 is a possible implementation of the method described in FIG. 9. In this implementation, the gNB-CU indicates the gNB-DU to establish or reconfigure a radio bearer in the multi-path relay scenario for the remote UE, and configure multi-path transmission for the radio bearer, and the gNB-DU determines, based on the RLC bearer and the indirect link (or the Uu relay RLC channel or the PC5 relay RLC channel) associated with the first radio bearer, the primary path corresponding to the first radio bearer. As shown in FIG. 10, the method includes the following steps.

1001: The gNB-CU determines to configure a multi-path for the remote UE, and selects relay UE that is connected to a same gNB-DU as the remote UE as target relay UE.

Before the gNB-CU performs step 1001, the remote UE may perform the following operations: The remote UE performs a discovery procedure based on a configuration of the base station, triggers measurement and reporting, and reports information about surrounding candidate relay UE. The information about the candidate relay UE may include a source L2 ID of the candidate relay UE, reference signal received power (reference signal received power, RSRP) of a sidelink between the remote UE and the candidate relay UE, and information about a serving cell of the candidate relay UE, for example, an NR cell identity (NR cell identity, NCI)/NR cell global identifier (NR cell global identifier, NCGI).

1002: The gNB-CU sends a UE context modification request message to the gNB-DU.

The UE context modification request message in step 1002 indicates the gNB-DU to establish or modify (if a PC5 relay RLC channel/Uu relay RLC channel has been previously configured for the target relay UE for data relay of other remote UEs) information about a PC5 relay RLC channel and a Uu relay RLC channel for the target relay UE (namely, the first relay UE). The UE context modification request message includes ID information of the PC5 relay RLC channel/Uu relay RLC channel and information about a quality of service (quality of service, QoS) requirement of a corresponding RLC channel. The gNB-CU may further indicate a local ID of remote UE, to indicate remote UE corresponding to the PC5 relay RLC channel or the Uu relay RLC channel. In other words, the UE context modification request message further includes the local ID of remote UE, to indicate the remote UE corresponding to the PC5 relay RLC channel or the Uu relay RLC channel.

1003: The gNB-DU sends a UE context modification response message to the gNB-CU.

The UE context modification response message in step 1003 may include a configuration of the Uu relay RLC channel/PC5 relay RLC channel. Step 1003 may be understood as follows: The gNB-DU determines, based on the UE context modification request message from the gNB-CU, and sends the configuration of the Uu relay RLC channel/PC5 relay RLC channel to the gNB-CU.

1004: The gNB-CU sends a message 1 to the gNB-DU.

The message 1 includes an RRC reconfiguration message of the target relay UE. The gNB-CU determines the RRC reconfiguration message of the target relay UE. The RRC reconfiguration message includes a relay configuration of the target relay UE. The relay configuration of the target relay UE may include the configuration of the Uu relay RLC channel/PC5 relay RLC channel and a configuration of an SRAP layer mapping relationship, and the SRAP mapping relationship includes a mapping relationship between the radio bearer of the remote UE and the Uu relay RLC channel/PC5 relay RLC channel. The message 1 may be a downlink RRC message transfer (DL RRC MESSAGE TRANSFER) message. The downlink RRC message transfer message is used by the gNB-CU to send a downlink RRC message to the gNB-DU through an F1 interface. Step 1004 may be understood as follows: The gNB-CU generates the relay configuration of the target relay UE, and sends the relay configuration to the gNB-DU based on a DL RRC MESSAGE TRANSFER.

1005: The gNB-DU sends an RRC reconfiguration message to the target relay UE.

As described above, the RRC reconfiguration message includes the configuration of the Uu relay RLC channel/PC5 relay RLC channel and the SRAP layer mapping relationship, that is, the relay configuration of the target relay UE.

1006: The target relay UE sends an RRC reconfiguration complete message to the gNB-DU.

For example, the target relay UE configures the Uu relay RLC channel/PC5 relay RLC channel and the SRAP layer mapping relationship based on the RRC reconfiguration message, and sends the RRC reconfiguration complete message to the gNB-DU after completing the configuration. The RRC reconfiguration complete message indicates that the target relay UE completes the relay configuration, that is, configures the Uu relay RLC channel/PC5 relay RLC channel and the SRAP layer mapping relationship.

1007: The gNB-DU sends a message 2 to the gNB-CU.

The message 2 includes the RRC reconfiguration complete message of the target relay UE, and indicates that the target relay UE completes the relay configuration. The message 2 may be an uplink RRC message transfer (UL RRC MESSAGE TRANSFER) message. The uplink RRC message transfer message is used by the gNB-DU to send an uplink RRC message to the gNB-CU through an F 1 interface.

1008: The gNB-CU sends a first message to the gNB-DU.

For step 1008, refer to step 901.

In a possible implementation, the gNB-CU may further send indication information to the gNB-DU, where the indication information includes related information for the remote UE to perform sidelink communication, for example, L2 ID information of the remote UE and/or a sidelink transmission resource requested by the remote UE; and the indication message indicates the gNB-DU to provide a sidelink resource configuration. In a possible manner, the indication information is a SidelinkUEInformation (SUI) message, and the SUI message is an RRC message previously sent by the remote UE to the base station.

1009: The gNB-DU sends a second message to the gNB-CU.

For step 1009, refer to step 902.

In a possible implementation, the gNB-DU determines the sidelink resource configuration based on the indication message in step 1008, and sends the sidelink resource configuration to the gNB-CU. The sidelink resource configuration includes a configuration of a sidelink resource selection mode and a configuration of a resource pool/frequency for data sending and receiving, where the sidelink resource selection mode includes a mode 1 and a mode 2. The mode 1 means that the base station allocates, to the remote UE based on an amount of to-be-transmitted data reported by the remote UE, a time-frequency resource on a sidelink for sidelink data transmission. The mode 2 means that the remote UE selects, based on a resource pool configuration of the base station, a time-frequency resource on a sidelink for data transmission. A selection manner is, for example, randomly selecting a resource or selecting a resource by listening to a resource occupation status.

1010: The gNB-CU sends an RRC reconfiguration message of the remote UE to the gNB-DU.

The RRC reconfiguration message of the remote UE includes configuration information of a first radio bearer. The first radio bearer is an SRB or a DRB.

Specifically, the gNB-CU determines that the RRC reconfiguration message of the remote UE includes the configuration information of the first radio bearer. The gN-CU sends a DL RRC MESSAGE TRANSFER including the RRC reconfiguration message of the remote UE to the gNB-DU. The RRC reconfiguration message further includes the sidelink resource configuration.

1011: The gNB-DU forwards the RRC reconfiguration message of the remote UE to the remote UE.

The RRC reconfiguration message includes the configuration information of the first radio bearer.

1012: The remote UE establishes a PC5 connection to the target relay UE based on the configuration of the gNB, and maintains an original direct link.

That the remote UE establishes the PC5 connection to the target relay UE may be that the remote UE establishes a PC5 relay RLC channel to the target relay UE.

1013: The remote UE sends an RRC reconfiguration complete message to the gNB-DU.

The RRC reconfiguration complete message indicates that the remote UE completes the configuration for the first radio bearer. Based on the configuration of the first radio bearer of the base station, the remote UE may reply with the RRC reconfiguration complete message through the direct link and/or an indirect link. The first radio bearer is a peer-to-peer signaling radio bearer used to carry the RRC reconfiguration complete message, for example, a signaling radio bearer 1/SRB 1. For example, if the base station configures PDCP duplication for the SRB 1, the remote UE may send the RRC reconfiguration complete message through both the direct link and the indirect link. If the base station configures the SRB 1 on the direct link, the remote UE can send the RRC reconfiguration complete message only through the direct link. Based on a configuration of the SRB 1, the base station may further configure a timer T1 and/or a timer T2 for the remote UE.

In a possible implementation, when the remote UE sends the RRC reconfiguration complete message to the base station (namely, the gNB-DU) through the direct link, the timer T1 is started. If the RRC reconfiguration complete message is successfully sent within duration of T1, the timer T1 is stopped. If the timer T1 expires, it is determined that a link failure or an RRC failure occurs on the direct link. When the remote UE sends the RRC reconfiguration complete message to the base station via the relay UE, the timer T2 is started. If a reception success indication replied with by the relay UE is received within duration of T2, the timer T2 is stopped. If the timer T2 expires, it is determined that a link failure or an RRC failure occurs on a sidelink, and it may be further determined that a failure occurs on the indirect link. If PDCP duplication is configured for the SRB 1 and both the timers T 1 and T2 expire, the remote UE determines that both links fail, and performs reestablishment. If the direct link fails and an SRB 1 message (namely, a message or data carried on the SRB 1) can be transmitted on the indirect link, the direct link failure is reported through the indirect link; otherwise, RRC reestablishment needs to be performed. If the indirect link fails and an SRB 1 message can be transmitted on the direct link, the remote UE reports failure information through the direct link.

If the target relay UE selected by the base station is in an idle (IDLE)/inactive (INACTVIE) state, the remote UE first performs configuration on a remote UE side, and after the remote UE triggers the target relay UE to enter a connected state, the base station performs configuration on a target relay UE side, that is, step 1002 to step 1007.

1014: The gNB-DU sends a message 3 to the gNB-CU.

The message 3 includes the RRC reconfiguration complete message of the remote UE, and indicates that the remote UE completes the configuration for the first radio bearer. Step 1013 and step 1014 may be considered as follows: The remote UE replies with the RRC reconfiguration complete message to the base station, to indicate that the configuration is completed.

Based on the foregoing configuration, a procedure of transmitting an SRB message (or referred to as SRB data) and DRB data (that is, data carried on a DRB) between the gNB-CU and the gNB-DU is as follows:

SRB transmission: In a downlink direction, the gNB-CU sends the SRB message to the gNB-DU. If PDCP duplication has been configured for the SRB and has been activated, the gNB-DU duplicates the SRB message, and sends a downlink SRB message through an RLC bearer and a Uu relay RLC channel. If the PDCP duplication is deactivated, that is, PDCP split is performed, the gNB-DU delivers the SRB message to an RLC bearer or a Uu relay RLC channel corresponding to a primary path. In an uplink direction, remote UE delivers the SRB message to an RLC bearer (corresponding to a direct link) or a PC5 relay RLC channel (corresponding to an indirect link) based on configuration of a signaling radio bearer, and the gNB-DU receives an uplink SRB message from a Uu relay RLC channel or an RLC bearer, and delivers the uplink SRB message to the gNB-CU. On the indirect link, the relay UE delivers, to a corresponding Uu relay RLC channel based on a configured SRAP layer mapping relationship, data received on the PC5 relay RLC channel.

DRB transmission: In a downlink direction, the gNB-CU sends the DRB data to the gNB-DU through a GTP-U tunnel, and the gNB-DU delivers the DRB data to a corresponding RLC bearer or a Uu relay RLC channel based on a configuration of the GTP-U tunnel, and sends the DRB data to UE. In an uplink direction, the remote UE delivers the DRB data to an RLC bearer and/or a PC5 relay RLC channel based on a configuration of a radio bearer, for example, whether PDCP duplication is configured and activated, and the gNB-DU receives uplink DRB data from the Uu relay RLC channel or the RLC bearer, delivers the uplink DRB data to the corresponding GTP-U tunnel for delivery to the gNB-CU.

In this embodiment of this application, the gNB-CU determines to establish a multi-path for the remote UE, and indicates the gNB-DU to provide a low-layer configuration corresponding to a peer-to-peer radio bearer of the remote UE. If the gNB-CU indicates to configure multi-path transmission for the peer-to-peer radio bearer (referred to as the first radio bearer) of the remote UE, the gNB-DU determines, based on an association that is between the first radio bearer and a direct link and/or an association that is between the first radio bearer and an indirect link and that is indicated by the gNB-CU, the primary path corresponding to the first radio bearer, and indicates the primary path to the gNB-CU. This can resolve a problem of how to configure multi-path transmission for a radio bearer in a multi-path relay communication scenario.

If the gNB-CU determines to configure multi-path transmission for the first radio bearer of the remote UE, the gNB-CU first needs to notify the gNB-DU that the first radio bearer is associated with the direct link and the indirect link. The following describes several possible implementations of the first indication information, the second indication information, and the third indication information.

### Implementation 11

The first indication information indicates that the first radio bearer is associated with one direct link and one indirect link; and the second indication information indicates a link type of the primary path corresponding to the first radio bearer, where the link type is a direct link or an indirect link. The third indication information indicates a link type of the primary path corresponding to the first radio bearer. Link types are classified into a direct link and an indirect link. That the first indication information indicates that the first radio bearer is associated with one direct link and one indirect link may be replaced with that the first indication information indicates that the first radio bearer is associated with a first bearer and a second bearer, where the first bearer is a transmission resource that is associated with the first radio bearer and that is for the remote UE on the direct link. The second bearer is a transmission resource between relay UE and a network device, and the second bearer is used to carry the data of the first radio bearer. The remote UE establishes an indirect link to the gNB via the relay UE. For example, the first bearer is an RLC bearer of the first radio bearer on the direct link, and the second bearer is a Uu RLC bearer or a PC5 relay RLC channel of the first radio bearer on the indirect link. For example, the gNB-DU determines that the primary path corresponding to the first radio bearer is on the direct link or the indirect link, and indicates, in the second message replied with to the gNB-CU, the link type corresponding to the primary path, that is, a direct link or an indirect link. The gNB-CU determines a configuration of a bearer of the remote UE, and indicates, in a configuration of the first radio bearer, that the primary path is a direct link or an indirect link. For example, the gNB-DU determines, based on a QoS requirement of the first radio bearer, the primary path corresponding to the first radio bearer. In this implementation, the first radio bearer is associated with one direct link and one indirect link, the second indication information indicates the link type of the primary path corresponding to the first radio bearer, and the primary path corresponding to the first radio bearer can be determined based on the link type.

### Implementation 12

The first indication information indicates that the first radio bearer is associated with one direct link and one indirect link. The second indication information indicates a first bearer or a second bearer corresponding to the primary path corresponding to the first radio bearer. The third indication information indicates the first bearer or the second bearer corresponding to the primary path corresponding to the first radio bearer. The first bearer is a transmission resource that is associated with the first radio bearer and that is for the remote UE on the direct link. The second bearer is a transmission resource between relay UE and a network device, and the second bearer is used to carry the data of the first radio bearer. The remote UE establishes an indirect link to the gNB via the relay UE. The gNB-CU and the gNB-DU are a CU and a DU obtained by dividing the gNB. For example, the first bearer is an RLC bearer associated with the first radio bearer on the direct link. For example, the second bearer is a Uu relay RLC channel on an indirect link between the relay UE and the gNB, and the second indication information indicates an LCID of the first bearer corresponding to the primary path corresponding to the first radio bearer, or the second indication information indicates an ID of a Uu relay RLC channel corresponding to the primary path corresponding to the first radio bearer. For example, if the gNB-DU determines that the primary path corresponding to the first radio bearer is associated with the direct link, the second indication information indicates an LCID of an RLC bearer corresponding to the primary path. If the gNB-DU determines that the primary path corresponding to the first radio bearer is associated with the indirect link, the second indication information indicates that the primary path is an indirect link. Optionally, the second indication information may alternatively indicate an ID of the second bearer corresponding to the primary path corresponding to the first radio bearer, for example, an ID of a Uu relay RLC channel. Correspondingly, the third indication information indicates the LCID or the indirect link. Alternatively, optionally, the third indication information indicates the LCID or an ID of a third bearer corresponding to the primary path corresponding to the first radio bearer, and the third bearer is a transmission resource between the remote UE and the relay UE, and is used to carry the data of the first radio bearer.

Implementation 13: The first indication information indicates that the first radio bearer is associated with one or more first bearers and indicates that the first radio bearer is associated with one or more second bearers. The second indication information indicates a first bearer corresponding to the primary path corresponding to the first radio bearer, or the second indication information indicates that the primary path corresponding to the first radio bearer corresponds to the indirect link, or the second indication information indicates a second bearer corresponding to the primary path corresponding to the first radio bearer, or the second indication information indicates relay UE on the primary path corresponding to the first radio bearer. The third indication information indicates the first bearer or the second bearer corresponding to the primary path corresponding to the first radio bearer, or the third indication information indicates the indirect link corresponding to the primary path of the first radio bearer, or the third indication information indicates the relay UE associated with the primary path corresponding to the first radio bearer, or the third indication information indicates an LCID or an ID of a third bearer corresponding to the primary path corresponding to the first radio bearer. The third bearer is a transmission resource between the remote UE and the relay UE, and is used to carry the data of the first radio bearer. The following describes several scenarios in this implementation and examples of the first indication information, the second indication information, and the third indication information in the several scenarios.

Scenario 11 is a scenario in which carrier aggregation (carrier aggregation, CA) is configured for the first radio bearer on a direct link, that is, the first radio bearer is associated with a plurality of RLC bearers on the direct link, but is associated with only one Uu relay RLC channel and one PC5 relay RLC channel on an indirect link. For example, the gNB-CU determines that the first radio bearer is associated with one or more RLC bearers and one PC5 relay RLC channel, and sends the first indication information to the gNB-DU. The first indication information indicates a quantity of RLC bearers associated with the first radio bearer, and indicates a Uu relay RLC channel or the PC5 relay RLC channel associated with the first radio bearer. Alternatively, the first indication information indicates a total quantity of RLC bearers and Uu relay RLC channels or PC5 relay RLC channels that are associated with the first radio bearer. Alternatively, the first indication information is used to associate a radio bearer with a Uu relay RLC channel or a PC5 relay RLC channel. In addition, the gNB-CU may further indicate, to the gNB-DU, the Uu relay RLC channel or the PC5 relay RLC channel associated with the first radio bearer. The gNB-DU determines, based on the first indication information of the gNB-CU, the primary path corresponding to the first radio bearer. If the gNB-DU determines that an RLC bearer in the RLC bearers corresponds to the primary path corresponding to the first radio bearer, the gNB-DU indicates, to the gNB-CU, an LCID corresponding to the RLC bearer. In other words, the second indication information indicates the LCID corresponding to the RLC bearer. If the gNB-DU determines that the indirect link, or the Uu relay RLC channel or the PC5 relay RLC channel corresponds to the primary path corresponding to the first radio bearer, the gNB-DU indicates, to the gNB-CU, a link type, or a Uu relay RLC channel corresponding to the first radio bearer or a PC5 relay RLC channel corresponding to the first radio bearer. In other words, the second indication information indicates the link type (indirect link) or the Uu relay RLC channel corresponding to the first radio bearer. Correspondingly, the third indication information indicates the LCID or the link type (indirect link). Alternatively, the third indication information indicates the LCID or the PC5 relay RLC channel corresponding to the first radio bearer.

Scenario 12 is a scenario in which CA may be configured on a sidelink, that is, the first radio bearer may be associated with a plurality of PC5 relay RLC channels on the sidelink. In a possible implementation, the first indication information indicates a quantity of PC5 relay RLC channels associated with the first radio bearer. Alternatively, the first indication information indicates that the first radio bearer is associated with a plurality of PC5 relay RLC channels. In an SRB data transmission process, an uplink direction is used as an example. After performing SRB data duplication, the remote UE performs transmission on a plurality of PC5 relay RLC channels. The gNB may configure that same SRB data is mapped to different Uu relay RLC channels after being transmitted on different PC5 relay RLC channels, that is, the PC5 relay RLC channels and the Uu relay RLC channels are mapped in a one-to-one manner, or are mapped to a same Uu relay RLC channel, that is, the PC5 relay RLC channels corresponding to the first radio bearer are mapped to a same Uu relay RLC channel. In the former case, the gNB-DU determines the primary path corresponding to the first radio bearer, and the second indication information indicates a Uu relay RLC channel corresponding to the primary path, for example, includes an ID of the Uu relay RLC channel corresponding to the primary path. For example, the gNB determines the primary path based on a data bearer status of the Uu relay RLC channel. For example, the gNB-DU selects a primary path corresponding to a Uu relay RLC channel with low load. A manner in which the gNB-DU or the gNB-CU determines the primary path corresponding to the first radio bearer is not limited in this application. In the latter case, the gNB-DU cannot determine PC5 relay RLC channels that are associated with the first radio bearer, and the second indication information indicates that the primary path corresponding to the first radio bearer is included in an indirect link, a PC5 relay RLC channel corresponding to the primary path corresponding to the first radio bearer on the sidelink needs to be determined by the gNB-CU based on an indication indicating that the gNB-DU determines that the primary path is on the indirect link. If the gNB-DU determines that the primary path corresponding to the first radio bearer is included in a direct link, the second indication information indicates an LCID of an RLC bearer corresponding to the primary path. Finally, the gNB-CU generates a configuration of the first radio bearer, and the third indication information indicates the LCID of the RLC bearer or an ID of a PC5 relay RLC channel corresponding to the primary path corresponding to the first radio bearer.

In another possible implementation, the first indication information further indicates that the first radio bearer is associated with one or more third bearers. The third bearer may be a PC5 relay RLC channel. For example, the first indication information further indicates a PC5 relay RLC channel corresponding to the first radio bearer, that is, a mapping relationship between the first radio bearer and the PC5 relay RLC channel, and may specifically include an ID of the PC5 relay RLC channel. The first indication information indicates a mapping relationship between the first radio bearer and one or more PC5 relay RLC channels based on whether CA is configured on the sidelink. In a scenario in which only two links are supported, or CA is supported on a direct link, but a connection to only one relay UE is supported on an indirect link, if the gNB-DU determines that the primary path corresponding to the first radio bearer is included in (or configured on) the indirect link, the second indication information indicates a PC5 relay RLC channel corresponding to the first radio bearer, and the third indication information indicates the PC5 relay RLC channel corresponding to the first radio bearer. If the gNB-DU determines that the primary path corresponding to the first radio bearer corresponds to an RLC bearer on the direct link, the second indication information indicates an LCID corresponding to the RLC bearer, and the third indication information indicates the LCID corresponding to the RLC bearer. In a scenario in which sidelink CA is supported, the first radio bearer is associated with a plurality of PC5 relay RLC channels on the sidelink, and the plurality of PC5 relay RLC channels may be associated with a plurality of carriers on the sidelink. In this case, if the gNB-DU determines that the primary path corresponding to the first radio bearer is associated with a PC5 relay RLC channel on the indirect link, the second indication information indicates the PC5 relay RLC channel, and the third indication information indicates the PC5 relay RLC channel. In a scenario in which the remote UE is supported to be connected to a plurality of relay UEs, the first indication information carries an ID of relay UE + an ID of a PC5 relay RLC channel. In this application, "+" has a same meaning as "and". After the gNB-DU determines the primary path corresponding to the first radio bearer, the gNB-DU indicates the ID of the relay UE or the ID of the relay UE + the PC5 relay RLC channel to the gNB-CU. In other words, the second indication information indicates the ID of the relay UE or the ID of the relay UE + the PC5 relay RLC channel corresponding to the primary path corresponding to the first radio bearer. The third indication information indicates the ID of the relay UE or the ID of the relay UE + the PC5 relay RLC channel corresponding to the primary path corresponding to the first radio bearer. The ID that is of the relay UE and that is indicated between the gNB-CU and the gNB-DU may be ID information of the relay UE on an F1 interface, namely, an F1AP ID, or may be an index/temporary identifier allocated by the gNB-CU, or may be a temporary identifier that is allocated by the remote UE to the relay UE and that is reported by the remote UE to the gNB-CU.

Scenario 13 is a scenario in which the remote UE establishes a plurality of indirect links via a plurality of relay UEs. In a scenario in which the plurality of relay UEs are configured for the remote UE, the first indication information further indicates ID information of relay UE corresponding to a Uu relay RLC channel, to indicate that the first radio bearer is to be transmitted through the Uu relay RLC channel of the indicated relay UE. In this case, when the gNB-DU selects the indirect link as the primary path corresponding to the first radio bearer, the second indication information indicates an ID of relay UE or indicates an ID of relay UE + an ID of a Uu relay RLC channel. Correspondingly, the third indication information indicates the ID of the relay UE or the ID of the relay UE + an ID of a PC5 relay RLC channel corresponding to the primary path corresponding to the first radio bearer. The PC5 relay RLC channel is an RLC bearer that is of the first radio bearer on a sidelink and that is configured by the gNB-CU for the remote UE. The ID of the relay UE may be an L2 ID of the relay UE, or a temporary identifier allocated by the remote UE to the relay UE.

Table 1 shows several possible implementations of the first indication information, the second indication information, and the third indication information.

**Table 1**

| First indication information | Second indication information | Third indication information |
|---|---|---|
| Indicate that the first radio bearer is associated with a direct link and an indirect link or, the first radio bearer is associated with one Uu RLC bearer and one Uu relay RLC channel | Link type; or LCID/indirect link; or LCID/Uu relay RLC channel | Link type; or LCID/indirect link; or LCID/PC5 relay RLC channel |
| Indicate that the first radio bearer is associated with one or more Uu RLC bearers + one Uu relay RLC channel (direct CA + indirect) | LCID/indirect indication; or LCID/Uu relay RLC channel | LCID/indirect indication; |
| | | LCID/PC5 relay RLC channel |
| Indicate that the first radio bearer is associated with one or more Uu RLC bearers + one Uu relay RLC channel (direct CA + indirect) Note: CA is configured on a sidelink, that is, the first radio bearer is associated with a plurality of PC5 relay RLC channels (but the gNB-CU does not indicate the associated PC5 relay RLC channel to the gNB-DU) | LCID/indirect indication; or LCID/Uu relay RLC channel | LCID/PC5 relay RLC channel If the gNB-DU indicates that the primary path is associated with an indirect link, the gNB-CU needs to determine a PC5 relay RLC channel associated with the primary path |
| Indicate that the first radio bearer is associated with one or more Uu RLCs + one Uu relay RLC (direct CA + indirect) + sidelink CA (indicating a PC5 relay RLC channel) | LCID/PC5 relay RLC channel | LCID/PC5 relay RLC channel |
| Indicate that the first radio bearer is associated with one or more Uu RLCs + a plurality of Uu relay RLCs (direct CA + indirect provided by a plurality of relay UEs) Indicate an ID of relay UE and a Uu relay RLC channel | LCID + indirect indication (for example, a relay UE ID indication); or LCID/Uu relay RLC channel | LCID/PC5 relay RLC channel |

Refer to Table 1. A first row in Table 1 shows the first indication information, the second indication information, and the third indication information in Implementation 11 and Implementation 12; a second row in Table 1 shows the first indication information, the second indication information, and the third indication information in Scenario 11 of Implementation 13; a third row and a fourth row in Table 1 show the first indication information, the second indication information, and the third indication information in Scenario 12 of Implementation 13; and a fifth row in Table 1 shows the first indication information, the second indication information, and the third indication information in Scenario 13 of Implementation 13.

The foregoing describes the solution in which the gNB-DU determines the primary path corresponding to the first radio bearer (SRB or DRB). The following describes a solution in which the gNB-DU determines the primary path corresponding to the first radio bearer (DRB). In the solution in which the gNB-DU determines the primary path corresponding to the first radio bearer (SRB or DRB), the first indication information indicates to establish a plurality of first channels for the first radio bearer and indicates that the first radio bearer is associated with a direct link and an indirect link. The first channel is a data transmission channel between a first network device and a second network device, is used to carry data of the first radio bearer, and is associated with the direct link or the indirect link. For example, the first network device is a CU, the second network device is a DU, and the first tunnel is a GTP-U tunnel. If it is indicated that the established GTP-U tunnel is associated with the indirect link, a Uu relay RLC channel corresponding to the GTP-U tunnel is further indicated, that is, an ID of a corresponding Uu relay RLC channel is indicated. The second indication information indicates that the primary path corresponding to the first radio bearer is included in a second link, and the second link is a direct link or an indirect link. The third indication information indicates the primary path corresponding to the first radio bearer. The following describes several possible implementations of the first indication information, the second indication information, and the third indication information when the gNB-DU determines the primary path corresponding to the first radio bearer (DRB).

### Implementation 21

The first indication information indicates that the first radio bearer is associated with one direct link and one indirect link. The first indication information further indicates a plurality of first channels associated with the first radio bearer. The plurality of first channels are associated with the direct link and the indirect link. For a first channel corresponding to the indirect link, the first indication information further indicates a mapping relationship between the first channel and a second bearer. The second bearer is a transmission resource between relay UE and a network device, and the second bearer is used to carry data of the first radio bearer. In an example, the second bearer is a PC5 RLC bearer or a PC5 relay RLC channel on the indirect link. The second indication information indicates a link type of the primary path corresponding to the first radio bearer, and the link type is a direct link or an indirect link. The third indication information indicates a link type of the primary path corresponding to the first radio bearer. That the first indication information indicates that the first radio bearer is associated with one direct link and one indirect link may be replaced with that the first indication information indicates that the first radio bearer is associated with a first bearer and a second bearer, where the first bearer is a transmission resource that is associated with the first radio bearer and that is for the remote UE on the direct link. The second bearer is the transmission resource between the relay UE and the network device, and the second bearer is used to carry the data of the first radio bearer. The remote UE establishes an indirect link to the gNB via the relay UE. For example, the first bearer is an RLC bearer of the first radio bearer on the direct link, and the second bearer is a Uu RLC bearer or a PC5 relay RLC channel of the first radio bearer on the indirect link. For example, the gNB-DU determines that the primary path corresponding to the first radio bearer is on the direct link or the indirect link, and indicates, in the second message replied with to the gNB-CU, the link type corresponding to the primary path, that is, a direct link or an indirect link. The gNB-CU determines a configuration of a bearer of the remote UE, and indicates, in a configuration of the first radio bearer, that the primary path is a direct link or an indirect link. For example, the gNB-DU determines, based on a QoS requirement of the first radio bearer, the primary path corresponding to the first radio bearer.

### Implementation 22

The first indication information indicates that the first radio bearer is associated with one or more direct links and one indirect link. The first indication information further indicates a plurality of first channels associated with the first radio bearer. The plurality of first channels are associated with the direct link and the indirect link. For a first channel corresponding to the indirect link, the first indication information further indicates a mapping relationship between the first channel and a second bearer. When the gNB-DU determines that the primary path corresponding to the first radio bearer corresponds to the direct link, the second indication information indicates a first bearer corresponding to the primary path corresponding to the first radio bearer. Correspondingly, the second indication information indicates the first bearer corresponding to the primary path corresponding to the first radio bearer. For example, the first bearer is an RLC bearer associated with the first radio bearer on the direct link. The second bearer is a transmission resource between relay UE and a network device, and the second bearer is used to carry data of the first radio bearer. In an example, the second bearer is a PC5 RLC bearer or a PC5 relay RLC channel on the indirect link. When the gNB-DU determines that the primary path corresponding to the first radio bearer corresponds to the indirect link, the second indication information indicates that the primary path corresponding to the first radio bearer is included in the indirect link, that is, the primary path corresponding to the first radio bearer is on the indirect link. Correspondingly, the second indication information indicates that the primary path corresponding to the first radio bearer corresponds to the indirect link, or the second indication information indicates the first channel corresponding to the primary path corresponding to the first radio bearer, or the second indication information indicates the first channel corresponding to the primary path corresponding to the first radio bearer. For example, if the first radio bearer can be associated with a maximum of one RLC bearer (direct link) and one PC5 relay RLC channel (indirect link), in the solution in which the gNB-DU determines the primary path corresponding to the first radio bearer, the gNB-DU determines that the primary path corresponds to the direct link or the indirect link, and the gNB-DU replies with, to the gNB-CU, an LCID corresponding to the RLC bearer configured on the direct link, or indicates that the primary path is on the indirect link. If the DRB is associated with a plurality of RLC bearers and one PC5 relay RLC channel, a processing manner is similar to the foregoing processing manner. In this example, the gNB-CU determines configuration information of the first radio bearer for the remote UE. The third indication information includes the LCID corresponding to the RLC bearer or an indirect link indication. Alternatively, the third indication information includes the LCID corresponding to the RLC bearer or an ID of the PC5 relay RLC channel.

### Implementation 23

The first indication information indicates that the first radio bearer is associated with one or more first bearers and indicates that the first radio bearer is associated with one or more second bearers. The first indication information further indicates a plurality of first channels associated with the first radio bearer. The plurality of first channels are associated with the direct link and the indirect link. For a first channel corresponding to the indirect link, the first indication information further indicates a mapping relationship between the first channel and a second bearer. The second indication information indicates a first bearer corresponding to the primary path of the first radio bearer, and correspondingly, the third indication information indicates the first bearer corresponding to the primary path of the first radio bearer. Alternatively, the second indication information indicates that the primary path of the first radio bearer corresponds to the indirect link, and correspondingly, the third indication information indicates that the primary path of the first radio bearer corresponds to the indirect link. Alternatively, the second indication information indicates a second bearer corresponding to the primary path of the first radio bearer, and correspondingly, the third indication information indicates the second bearer corresponding to the primary path of the first radio bearer. Alternatively, the second indication information indicates relay UE corresponding to the primary path of the first radio bearer, and correspondingly, the third indication information indicates the relay UE corresponding to the primary path of the first radio bearer. The following describes several scenarios in this implementation and examples of the first indication information, the second indication information, and the third indication information in the several scenarios.

Scenario 21: In a scenario in which the first radio bearer can be associated with a plurality of PC5 relay RLC channels on a sidelink, that is, the first radio bearer supports CA on the sidelink, the GTP-U tunnel may include one or more Uu relay RLC channels, which depends on whether data on a same DRB transmitted on different PC5 relay RLC channels needs to be transmitted on a same Uu relay RLC channel or different Uu relay RLC channels. If the data is transmitted on the different Uu relay RLC channels, after determining the primary path corresponding to the first radio bearer, the gNB-DU indicates, to the gNB-CU, an LCID of an RLC bearer or an ID of a Uu relay RLC channel corresponding to the primary path. In other words, the second indication information indicates the first bearer or the second bearer corresponding to the primary path. Optionally, if the gNB-DU determines that the primary path corresponds to the indirect link, the gNB-DU may also indicate a corresponding GTP-U tunnel. If the data is transmitted on the same Uu relay RLC channel, the gNB-DU can only indicate that the primary path is on the indirect link. In other words, the second indication information indicates that the primary path of the first radio bearer corresponds to the indirect link. Then, the gNB-CU selects, based on the second indication information, a PC5 relay RLC channel associated with the primary path corresponding to the first radio bearer. The third indication information in the configuration information that is of the first radio bearer and that is sent by the gNB-CU to the remote UE may include the LCID corresponding to the RLC bearer or an ID of the PC5 relay RLC channel.

In another possible implementation, the first indication information further indicates that the first radio bearer is associated with one or more third bearers, or the first indication information further indicates one or more third bearers corresponding to the plurality of GPT-U tunnels. For example, the first indication information further indicates PC5 relay RLC channels corresponding to the plurality of GTP-U tunnels. The third bearer is a transmission resource between the remote UE and relay UE, and the third bearer is used to carry data of the first radio bearer. For example, the third bearer is a PC5 relay RLC channel on an indirect link between the remote UE and the relay UE. When determining that the primary path corresponding to the first radio bearer is associated with the indirect link, the gNB-DU may directly determine and indicate the PC5 relay RLC channel corresponding to the primary path. In other words, the second indication information indicates the PC5 relay RLC channel corresponding to the primary path corresponding to the first radio bearer. Correspondingly, the third indication information indicates the PC5 relay RLC channel corresponding to the primary path corresponding to the first radio bearer.

Scenario 22 is a scenario in which the remote UE establishes a plurality of indirect links via a plurality of relay UEs. In a scenario in which the plurality of relay UEs are configured for the remote UE, when indicating a Uu relay RLC channel corresponding to the GTP-U tunnel associated with the first radio bearer, the first indication information further indicates ID information of relay UE corresponding to the Uu relay RLC channel, to indicate that the first radio bearer is to be transmitted through the Uu relay RLC channel of the indicated relay UE. When the gNB-DU selects the indirect link as the primary path corresponding to the first radio bearer, the second indication information indicates an ID of relay UE or indicates an ID of relay UE + an ID of a Uu relay RLC channel. Correspondingly, the third indication information indicates the ID of the relay UE or the ID of the relay UE + an ID of a PC5 relay RLC channel corresponding to the primary path corresponding to the first radio bearer. The PC5 relay RLC channel is an RLC bearer that is of the first radio bearer on a sidelink and that is configured by the gNB-CU for the remote UE, and the PC5 relay RLC channel corresponds to the Uu relay RLC channel indicated by the gNB-DU. The ID of the relay UE may be an L2 ID of the relay UE, or a temporary identifier allocated by the remote UE to the relay UE.

It should be noted that the foregoing lists only several possible implementations of the first indication information, the second indication information, and the third indication information when the gNB-DU determines the primary path corresponding to the first radio bearer (DRB), instead of all implementations.

In the solution in which the gNB-CU determines the primary path corresponding to the first radio bearer (DRB), the first indication information indicates to establish a plurality of GTP-U tunnels for the first radio bearer, and the first indication information further indicates that the primary path corresponding to the first radio bearer is on the direct link or the indirect link, or the first indication information further indicates a GTP-U tunnel associated with the primary path corresponding to the first radio bearer. The second indication information indicates an LCID of an RLC bearer corresponding to the primary path corresponding to the first radio bearer, or the second indication information indicates that the primary path corresponding to the first radio bearer is associated with the indirect link. The third indication information indicates the primary path corresponding to the first radio bearer. The following describes several possible implementations of the first indication information, the second indication information, and the third indication information when the gNB-CU determines the primary path corresponding to the first radio bearer (DRB).

### Implementation 31

If the first radio bearer is associated with only one RLC bearer and one PC5 relay RLC channel, in the solution in which the gNB-CU determines the primary path corresponding to the first radio bearer, the gNB-CU determines that the primary path corresponds to the direct link or the indirect link, and sends the first message including the first indication information to the gNB-DU. The first indication information indicates that the primary path corresponding to the first radio bearer is included in the direct link or the indirect link. Alternatively, the first indication information indicates a GTP-U tunnel or a Uu relay RLC channel associated with the primary path corresponding to the first radio bearer. If the first indication information indicates that the primary path corresponding to the first radio bearer is on the direct link, the gNB-DU may reply with an LCID of an RLC bearer that is on the direct link and that corresponds to the primary path. If the first indication information indicates that the primary path corresponding to the first radio bearer is on the indirect link, the gNB-DU may not reply with the first indication information by default, or may reply that the primary path corresponding to the first radio bearer is associated with the indirect link, or indicate the GTP-U tunnel or the Uu relay RLC channel associated with the primary path. The second message may include the second indication information indicating that the primary path corresponding to the first radio bearer is on the indirect link. For example, the second indication information indicates the gNB-DU to determine that the primary path corresponding to the first radio bearer is on the indirect link. When the second message does not include the LCID of the RLC bearer that is on the direct link and that corresponds to the primary path, it indicates that the primary path corresponding to the first radio bearer is on the indirect link. The gNB-CU determines configuration information of the first radio bearer for the remote UE. The third indication information may include the LCID corresponding to the RLC bearer or an indirect link indication corresponding to the primary path corresponding to the first radio bearer. Alternatively, the third indication information may include the LCID corresponding to the RLC bearer or an ID of a PC5 relay RLC channel corresponding to the primary path corresponding to the first radio bearer.

### Implementation 32

If the first radio bearer can be associated with a plurality of PC5 relay RLC channels on a sidelink (that is, support sidelink CA), the GTP-U tunnel may include one or more Uu relay RLC channels, which depends on whether data on a same DRB transmitted on different PC5 relay RLC channels needs to be transmitted on a same Uu relay RLC channel or different Uu relay RLC channels. If the data is transmitted on the different Uu relay RLC channels, after determining the primary path corresponding to the first radio bearer, the gNB-CU includes indication information in a corresponding GTP-U tunnel, to indicate that a Uu relay RLC channel associated with the GTP-U tunnel corresponds to the primary path corresponding to the first radio bearer. The first indication information indicates the GTP-U tunnel associated with the primary path corresponding to the first radio bearer, and the GTP-U tunnel includes one Uu relay RLC channel. If the data is transmitted on the same Uu relay RLC channel, the gNB-CU indicates to include indication information in a corresponding GTP-U tunnel, or indicates that the primary path corresponding to the first radio bearer is on the indirect link. In other words, the first indication information indicates that the primary path corresponding to the first radio bearer is on the indirect link. The gNB-DU replies with, based on the first indication information of the gNB-CU, an LCID of an RLC bearer corresponding to the primary path corresponding to the first radio bearer or determines that the primary path is associated with the indirect link. Configuration information of the first radio bearer for the remote UE includes the third indication information. The third indication information may include the LCID corresponding to the RLC bearer or an ID of a PC5 relay RLC channel corresponding to the primary path corresponding to the first radio bearer.

In the solution in which the gNB-CU determines the primary path corresponding to the first radio bearer (SRB), the first indication information indicates to configure multi-path transmission for the first radio bearer of the first UE (or indicates to perform PDCP duplication or PDCP split for the first radio bearer based on a direct link and an indirect link) and indicates that the primary path corresponding to the first radio bearer is included in a first link. The second indication information indicates an LCID of an RLC bearer corresponding to the primary path corresponding to the first radio bearer, or the second indication information indicates that the primary path corresponding to the first radio bearer is associated with the indirect link. The third indication information indicates the primary path corresponding to the first radio bearer. The first link belongs to a direct link or an indirect link associated with the first radio bearer. The following describes several possible implementations of the first indication information, the second indication information, and the third indication information when the gNB-CU determines the primary path corresponding to the first radio bearer (SRB).

### Implementation 41

The first indication information indicates that the primary path corresponding to the first radio bearer is included in the direct link or the indirect link. When the first indication information indicates that the primary path corresponding to the first radio bearer is included in the direct link, the second indication information indicates an LCID of an RLC bearer corresponding to the primary path corresponding to the first radio bearer. Alternatively, when the first indication information indicates that the primary path corresponding to the first radio bearer is included in the indirect link, the second indication information indicates that the primary path corresponding to the first radio bearer is associated with the indirect link. Alternatively, when the first indication information indicates that the primary path corresponding to the first radio bearer is included in the indirect link, the second message does not include the second indication information. Alternatively, the second indication information indicates a Uu relay RLC channel associated with the first radio bearer. The third indication information indicates that the primary path corresponding to the first radio bearer is the direct link or the indirect link. Alternatively, the third indication information includes the LCID of the RLC bearer or an ID of a PC5 relay RLC channel corresponding to the primary path corresponding to the first radio bearer.

In a scenario in which CA can be configured for the first radio bearer on the direct link (that is, the first radio bearer may be associated with a plurality of RLC bearers on the direct link, but is associated with only one PC5 relay RLC channel on the indirect link), the first indication information indicates that the primary path corresponding to the first radio bearer is the direct link or the indirect link, and further indicates a CA status on the direct link, for example, a quantity of associated RLC bearers. If the gNB-CU indicates that the primary path corresponding to the first radio bearer is the direct link, the gNB-DU selects, based on an indication of the gNB-CU, one of the plurality of associated RLC bearers on the direct link to be associated with the primary path, and replies with an LCID of an RLC bearer corresponding to the selected primary path. If the gNB-CU indicates that the primary path corresponding to the first radio bearer is the indirect link, the gNB-DU may reply with acknowledgment information, or does not reply with any message by default. Alternatively, the second indication information indicates a Uu relay RLC channel associated with the first radio bearer. The gNB-CU generates a configuration of the first radio bearer of the remote UE. The third indication information in the configuration indicates that the primary path corresponding to the first radio bearer is the direct link or the indirect link, or includes the LCID of the RLC bearer or an ID of a PC5 relay RLC channel corresponding to the primary path.

In a scenario in which CA may be configured on a sidelink (that is, the first radio bearer may be associated with a plurality of PC5 relay RLC channels on the sidelink), the first indication information indicates a quantity of PC5 relay RLC channels associated with the first radio bearer. If the SRB data is transmitted on the plurality of PC5 relay RLC channels after duplication, the gNB-CU may configure the data on the plurality of PC5 relay RLC channels to be mapped to different Uu relay RLC channels or mapped to a same Uu relay RLC channel. The gNB-CU determines that the primary path corresponding to the first radio bearer is on the direct link or the indirect link. If the gNB-CU determines that the primary path corresponding to the first radio bearer is on the direct link, the gNB-CU may further indicate that the primary path is associated with a Uu relay RLC channel (carrying an ID indication of a Uu relay RLC channel). If the gNB-CU determines that the primary path corresponding to the first radio bearer is on the direct link, the gNB-DU replies with the LCID of the RLC bearer corresponding to the primary path corresponding to the first radio bearer. If CA is configured on the direct link, the gNB-DU further needs to select and determine, from the direct link, the RLC bearer corresponding to the primary path corresponding to the first radio bearer. The gNB-CU generates a configuration of the first radio bearer of the remote UE. The third indication information in the configuration indicates the LCID of the RLC bearer corresponding to the primary path or the ID of the PC5 relay RLC channel corresponding to the primary path.

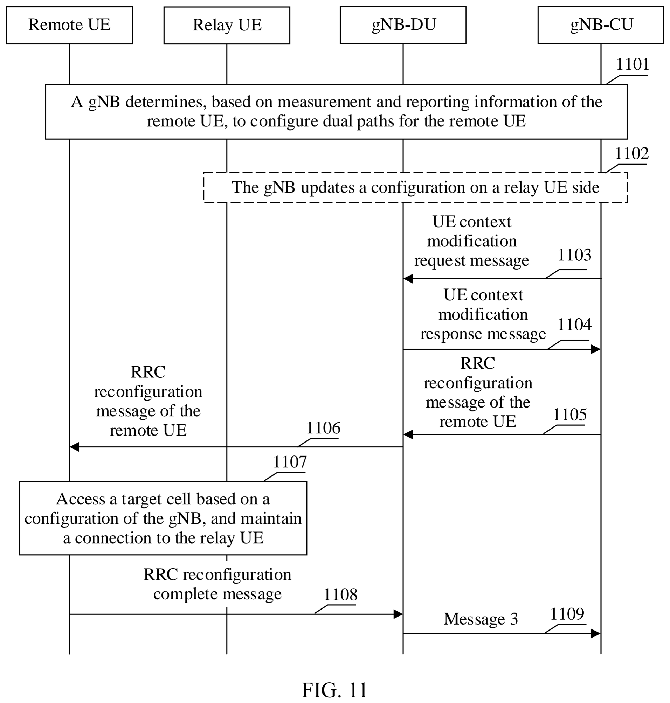

The following describes a solution in which remote UE is configured with dual paths (which may be referred to as dual links) from an indirect link in a CU-DU architecture. Embodiments of this application mainly focus on an interaction procedure that needs to be additionally considered on an F1 interface when the remote UE is configured with the dual paths from the indirect link. FIG. 11 is an interaction flowchart of another communication method according to an embodiment of this application. A method procedure in FIG. 11 shows an interaction procedure that needs to be additionally considered for an F1 interface when remote UE is configured with dual paths from an indirect link. As shown in FIG. 11, the method includes the following steps.

1101: A gNB determines, based on measurement and reporting information of remote UE, to configure the dual paths for the remote UE.

The remote UE may measure and report a suitable surrounding cell based on a configuration of the gNB, that is, send the measurement and reporting information to the gNB. In the procedure shown in FIG. 11, the remote UE is first connected to the base station via relay UE, for example, sends the measurement and reporting information to the gNB via the relay UE.

1102: The gNB updates a configuration on a relay UE side.

Step 1102 is optional. Because data of an SRB/a DRB of the remote UE is reconfigured from being transmitted through an original indirect link to being transmitted through two links, the gNB may further update the configuration on the relay UE side.

1103: A gNB-CU sends a UE context modification request message to a gNB-DU.

The UE context modification request message in step 1103 indicates to update a UE context of the remote UE. The UE context modification request message in step 1103 may include SRB/DRB setup or update indication information of the remote UE, for example, an SRB/a DRB to be setup/modified list. In addition, based on a requirement, the UE context modification request message in step 1103 may further indicate to establish or update a PC5 relay RLC channel of the remote UE. The UE context modification request message includes the first indication information.

The UE context modification request message in step 1103 may further include fourth indication information. The fourth indication information indicates the remote UE not to release an original indirect link connection or not to release original relay UE when a direct link is added. In other words, the gNB-CU further indicates an indirect link maintaining indication to the gNB-DU, to indicate the remote UE not to release the original indirect link connection, or not to release the original relay UE. The fourth indication information may further carry the relay UE corresponding to the indirect link that needs to be maintained. In addition, the fourth indication information may further carry configuration information of timers applied when the remote UE sends an RRC reconfiguration complete message to the base station, that is, a timer T1 applied to the indirect link and a timer T2 applied to the direct link.

1104: The gNB-DU sends a UE context modification response message to the gNB-CU.

The UE context modification response message in step 1104 may include the low-layer configuration information of the remote UE. The low-layer configuration information of the remote UE may include a configuration of a Uu RLC bearer and a configuration of the PC5 relay RLC channel. In addition, the low-layer configuration information may further include the fourth indication information (relay UE maintaining indication information or multi-path configuration indication information) that is to be included in RRC configuration information sent by the gNB-CU to the UE. The fourth indication information indicates to maintain the original indirect link or a connection to the original relay UE when the direct link is added for the remote UE, or still establish an indirect link via the original relay UE. The UE context modification response message includes the second indication information.

The gNB-DU may further determine, based on an implementation, whether to update a sidelink resource configuration. If it is determined to perform updating, the low-layer configuration information of the remote UE further includes the sidelink resource configuration: a configuration of a sidelink resource selection mode and a configuration of a resource pool/frequency for data sending and receiving.

1105: The gNB-CU sends an RRC reconfiguration message of the remote UE to the gNB-DU.

For example, the gNB-CU determines the RRC reconfiguration message of the remote UE, where the RRC reconfiguration message includes configuration information of a first radio bearer; and the gNB-CU indicates a corresponding primary path in configuration information of an SRB or a DRB for which multi-path transmission is configured. In addition, the sidelink resource configuration of the remote UE may be further included. A configuration manner of a multi-path configuration in step 1103 to step 1105 is similar to that in step 1008 to step 1010 in FIG. 10. Details are not described herein again.

1106: The gNB-DU sends the RRC reconfiguration message to the remote UE via the relay UE.

The RRC reconfiguration message includes the configuration information of the first radio bearer, and the configuration information of the first radio bearer includes the third indication information.

In a possible case, the gNB determines to update a configuration of a mapping relationship of an SRB 1 on the primary path. In this case, the gNB first performs step 1106. The relay UE forwards the RRC reconfiguration message to the remote UE by using an original mapping relationship (including a configuration of the SRB 1, a configuration of a Uu relay RLC channel, and the configuration of the PC5 relay RLC channel). After receiving the configuration, the remote UE updates the configuration of the SRB 1, that is, replies with an RRC reconfiguration complete message by using a new mapping relationship. In this case, if the relay UE does not complete configuration updating, the relay UE cannot correctly receive and forward the RRC reconfiguration complete message. In a possible implementation, after sending the RRC reconfiguration message to the remote UE, the gNB immediately sends an RRC reconfiguration message on the relay UE side, to ensure, as much as possible, that configuration updating is completed when the relay UE receives the RRC reconfiguration complete message of the remote UE.

In another possible implementation, the gNB constantly configures multi-path transmission for the SRB 1, and the remote UE replicates the RRC reconfiguration complete message, and sends the RRC reconfiguration complete message to the gNB through both the direct link and the indirect link. If the relay UE receives data from an unknown PC5 relay RLC channel, the relay UE directly discards the data. The unknown PC5 relay RLC channel means that a mapping relationship between the data of the radio bearer and the PC5 relay RLC channel is not configured on the relay UE side.

In another possible implementation, the gNB does not update the configuration of the SRB 1, that is, the remote UE replies with the RRC reconfiguration complete message only through the direct link. Alternatively, the default (default) configuration of the PC5 relay RLC channel is constantly used.

1107: The remote UE accesses a target cell based on the configuration of the gNB, and maintains the connection to the relay UE.

The configuration of the gNB includes a configuration in the RRC reconfiguration message.

1108: The remote UE replies with the RRC reconfiguration complete message through the direct link or the indirect link based on the SRB 1 configured by the base station.

1109: The gNB-DU sends a message 3 to the gNB-CU.

The message 3 includes the RRC reconfiguration complete message of the remote UE, and indicates that the remote UE completes the configuration for the first radio bearer. Step 1009 and step 1008 may be considered as follows: The remote UE replies with the RRC reconfiguration complete message to the base station, to indicate that the configuration is completed.

Compared with an existing procedure of configuring an indirect link for the remote UE, in the solution for the CU-DU split architecture provided in this application, the gNB-CU sends the fourth indication information to the gNB-DU, so that the remote UE still maintains the connection to the indirect link when the direct link is configured after receiving the configuration.

The following describes a solution of configuring multi-path transmission for an SRB/a DRB in an inter-DU-gNB architecture. In the inter-DU-gNB architecture, a gNB-CU determines a primary path corresponding to the SRB/DRB, and generates a configuration of an SRB/a DRB of remote UE.

FIG. 12A is an interaction flowchart of another communication method according to an embodiment of this application. As shown in FIG. 12A, the method includes the following steps.

1201A: A first network device sends a first message to a second network device. First UE is connected to the first network device via the second network device. For example, the first network device is a gNB-CU, and the second network device is a gNB-DU. The first message indicates related information of the first UE on a sidelink, or indicates a resource configuration of the first UE on a sidelink. If the first message indicates the related information of the first UE on the sidelink, the related information of the first UE on the sidelink may include identification information of the first UE on the sidelink, and may further include identification information of relay UE associated with the first UE on the sidelink. The first UE is connected to a third network device via the relay UE. If the first message indicates the resource configuration of the first UE on the sidelink, the resource configuration on the sidelink is determined by a third network device.

In a possible implementation, the first network device determines that the second network device provides the resource configuration of the first UE on the sidelink, and sends the first message to the second network device. The first message indicates the related information of the first UE on the sidelink.

1202A: The second network device sends a second message to the first network device. The second message includes the resource configuration of the first UE on the sidelink, and the second network device determines the resource configuration of the first UE on the sidelink based on the related information of the first UE on the sidelink. Step 1202A is an optional step.

1203A: The first network device sends a third message to the third network device. The first UE is connected to the first network device via the relay UE and the third network device. For example, the first network device is a gNB-CU, and the third network device is a gNB-DU. The first message indicates related information of the first UE on a sidelink, and the related information of the first UE on the sidelink may include identification information of the first UE on the sidelink and/or identification information of the relay UE on the sidelink.

Optionally, if the gNB-CU has received a resource configuration that is of the first UE on the sidelink and that is sent by the second network device, the third message may include the resource configuration that is of the first UE on the sidelink and that is sent by the second network device.

Optionally, the first network device determines that the third network device provides the resource configuration of the first UE on the sidelink, and sends the third message to the third network device. The third message includes the related information of the first UE on the sidelink.

1204A: The third network device sends a fourth message to the first network device. The fourth message includes the resource configuration of the first UE on the sidelink, and the third network device determines the resource configuration of the first UE on the sidelink based on the related information of the first UE on the sidelink.

There is no sequence between steps 1201A and 1202A and steps 1203A and 1204A. In a possible implementation, if the second network device determines the resource configuration of the first UE on the sidelink, steps 1203A and 1204A are optional steps.

FIG. 12 is an interaction flowchart of another communication method according to an embodiment of this application. As shown in FIG. 12, the method includes the following steps.

1201: A gNB-CU determines to configure a multi-path for remote UE, and selects relay UE that is connected to a gNB-DU different from that of the remote UE as target relay UE.

For step 1201, refer to step 1001. In a procedure shown in FIG. 12, the remote UE first directly accesses the gNB-CU via a gNB-DU 1.

1202: The gNB-CU triggers a configuration on a relay UE side.

Step 1202 is mainly used to configure a relay forwarding configuration on the relay UE side, including a PC5 relay RLC channel, a Uu relay RLC channel, and a mapping relationship between a radio bearer of the remote UE and the PC5 relay RLC channel/Uu relay RLC channel.

1203: The gNB-CU sends a UE context setup request message to a gNB-DU 2.

The UE context setup request message (UE CONTEXT SRTUP REQUEST) is used to set up a UE context of the remote UE on the gNB-DU 2. The UE CONTEXT SRTUP REQUEST message may include SRB/DRB setup indication information of the remote UE, for example, an SRB/a DRB to be setup list. In other words, it is configured that data of the SRB or DRB is transmitted via the target relay UE and a base station. The SRB/DRB setup indication information further includes a mapping relationship between the SRB/DRB and the Uu relay RLC channel. In addition, the UE CONTEXT SRTUP REQUEST further indicates to configure the PC5 relay RLC channel of the remote UE.

The gNB-CU further indicates fourth indication information (relay UE addition indication information or multi-path addition indication information) to the gNB-DU, to indicate, to the gNB-DU, information required for adding an indirect link, where the information may include ID information of relay UE, local ID information of the remote UE, and a timer T1.

In the UE context setup request message, the gNB-CU may further send indication information to the gNB-DU 2, to indicate related information for the remote UE to perform sidelink communication, for example, L2 ID information of the remote UE. The indication information may include a SidelinkUEInformation (SUI) message of the remote UE.

In a possible implementation, the gNB-CU determines a gNB-DU that determines a sidelink resource configuration. If the gNB-CU determines that the gNB-DU 2 performs sidelink resource configuration, related information for the remote UE to perform sidelink communication is indicated to the gNB-DU 2 in step 1203; otherwise, related information for the remote UE to perform sidelink communication may not be indicated.

1204: The gNB-DU 2 sends a UE context setup response message to the gNB-CU.

The UE context setup response message (UE CONTEXT RESPONSE REQUEST) includes low-layer configuration information, and the low-layer configuration information may include a configuration of the PC5 relay RLC channel and the fourth indication information in step 1203. For example, the gNB-DU 2 stores the mapping relationship between the SRB/DRB and the Uu relay RLC channel based on an indication of the gNB-CU, and provides the low-layer configuration information.

The gNB-DU 2 may further include low-layer sidelink resource configuration information of the remote UE in the UE context setup response message, including a sidelink resource selection mode and a sidelink resource pool configuration. In a possible implementation, because the gNB-DU 2 is connected to the remote UE through an indirect link, only a sidelink resource selection mode mode 1 is supported to be configured. In another possible implementation, a sidelink resource selection mode mode 2 may alternatively be configured for the gNB-DU 2. In this case, as described in step 1205, the gNB-CU further needs to send the sidelink resource configuration determined by the gNB-DU 2 to the gNB-DU 1.

1205: The gNB-CU sends a UE context modification request message to the gNB-DU 1.

The UE context modification request message in step 1205 indicates the gNB-DU 1 to update the context of the remote UE, for example, may indicate to update or release an SRB/a DRB. The UE context modification request message includes the first indication information.

If the gNB-CU determines, for an SRB or a DRB, that a primary path corresponding to the SRB or the DRB is configured on a direct link (or an indirect link), the gNB-CU indicates, in SRB/DRB configuration information of the remote UE, that the primary path is the direct link (or the indirect link). In another possible implementation, the gNB-CU sends primary path indication information to the gNB-DU 1, where the primary path indication information is applied to a multi-path scenario. The gNB-DU provides, based on the indication of the gNB-CU, an LCID of an RLC bearer that is on the direct link and that corresponds to the primary path. The gNB-CU indicates, in the SRB/DRB configuration information of the remote UE, that the primary path is a corresponding LCID or an ID of a PC5 relay RLC channel.

If CA is configured for the SRB on the direct link, the gNB-CU 1 indicates, in step 1205, that PDCP duplication is configured, and the gNB-DU selects the primary path, and replies with the LCID corresponding to the primary path in step 1206. If CA is configured for the DRB on the direct link, the gNB-CU 1 configures a plurality of GTP-U tunnels corresponding to the DRB in step 1205, and indicates a GTP-U tunnel corresponding to the primary path.

In a possible implementation, the gNB-CU may further send indication information to the gNB-DU 1, where the indication information indicates related information for the remote UE to perform sidelink communication, and may include, for example, an L2 ID of the remote UE and/or an L2 ID of the relay UE. Optionally, the indication information further indicates to add an indirect link for the remote UE. Optionally, the indication information may be sidelinkUEInformation information of the remote UE.

In a possible implementation, the gNB-DU 2 determines and sends a sidelink resource configuration to the gNB-CU (as shown in step 1203 and step 1204). In this case, the gNB-CU sends, to the gNB-DU 1, sidelink resource configuration information determined by the gNB-DU 2. In a possible manner, if the gNB-DU 2 determines that the sidelink resource selection mode is the mode 1, the gNB-CU sends, to the gNB-DU 1, the sidelink resource configuration information determined by the gNB-DU 2. In a possible case, steps 1205 and 1206 are performed before steps 1203 and 1204. In this case, the gNB-CU needs to send, to the gNB-DU 1 by using another F1AP message, the sidelink resource configuration information determined by the gNB-DU 2. In a possible implementation, the gNB-CU determines a gNB-DU that determines a sidelink resource configuration. If the gNB-CU determines that the gNB-DU 1 performs sidelink resource configuration, related information for the remote UE to perform sidelink communication is indicated to the gNB-DU 1 in step 1205.

1206: The gNB-DU 1 sends a UE context modification response message to the gNB-CU.

The UE context modification response message includes low-layer configuration information, for example, a configuration of a Uu RLC bearer and a configuration of a PC5 relay RLC channel. The UE context modification response message may include the second indication information.

In a possible implementation, the gNB-DU 1 determines, based on the indication information of the gNB-CU in step 1205, and sends a sidelink resource configuration to the gNB-CU. The sidelink resource configuration includes a sidelink resource selection mode and a sidelink resource pool configuration, where the sidelink resource selection mode may be the mode 1 or the mode 2. In a possible implementation, the gNB-DU of the remote UE on the direct link, namely, the gNB-DU 1 in FIG. 12, is responsible for determining the sidelink resource configuration of the remote UE, and the gNB-DU of the remote UE on the indirect link, namely, the gNB-DU 2, is responsible for determining a low-layer PC5/Uu relay RLC channel configuration of the remote UE on the indirect link, but is not responsible for determining the sidelink resource configuration. Therefore, in step 1206, the gNB-CU constantly sends the indication information to the gNB-DU 1.

It should be noted that there is no strict sequence between steps 1203 and 1204 and steps 1205 and 1206. To be specific, a possible sequence is 1203, 1204, 1205, and 1206, or may be 1205, 1206, 1203, and 1204.

1207: The gNB-CU sends an RRC reconfiguration message of the remote UE to the gNB-DU 1. The RRC reconfiguration message includes the sidelink resource configuration of the remote UE.

In the foregoing procedure of determining the sidelink resource configuration of the remote UE, the gNB-CU may receive the sidelink resource configuration from both the gNB-DU 1 and the gNB-DU 2. In another possible implementation, the gNB-CU finally determines the sidelink resource configuration provided by the gNB-DU 1 or the gNB-DU 2 as a final sidelink resource configuration in the RRC reconfiguration message of the remote UE, and indicates a final determining result to the gNB-DU 1 and/or the gNB-DU 2.

For step 1207, refer to step 1105.

1208: The gNB-DU 1 sends the RRC reconfiguration message to the remote UE.

The RRC reconfiguration message includes configuration information of a first radio bearer. Step 1207 and step 1208 may be considered as follows: The gNB-CU generates an RRC configuration of the remote UE, and sends the RRC configuration to the remote UE.

In the configuration information of the first radio bearer, if multi-path transmission is configured for the first radio bearer of the remote UE, a primary path corresponding to the first radio bearer is further indicated, for example, an indication link type (a direct link or an indirect link) corresponding to the primary path, or an LCID of a direct link corresponding to the primary path, or an ID of a PC5 relay RLC channel of an indirect link corresponding to the primary path.

1209: The remote UE establishes a PC5 to the target relay UE based on a configuration of the base station, and maintains an original direct link.

1210: The remote UE sends an RRC reconfiguration complete message to the gNB-DU 1 through the direct link.

The RRC reconfiguration complete message indicates that the configuration of the remote UE is completed.

1211: The gNB-DU sends a message 3 to the gNB-CU.

The message 3 indicates that the remote UE completes the configuration for the first radio bearer. Step 1210 and step 1211 may be considered as follows: The remote UE replies with the RRC reconfiguration complete message to the gNB through the direct link, to indicate that the configuration is completed.

1210': The remote UE sends an RRC reconfiguration complete message to the gNB-DU 2 via the relay UE.

The RRC reconfiguration complete message indicates that the configuration of the remote UE is completed.

1211': The gNB-DU 2 sends a message 3 to the gNB-CU.

The message 3 indicates that the remote UE completes the configuration for the first radio bearer. Step 1210' and step 1211' may be considered as follows: The remote UE replies with the RRC reconfiguration complete message to the gNB via the relay UE, to indicate that the configuration is completed.

This embodiment of this application provides the multi-path configuration procedure of the remote UE in an inter-gNB-DU architecture. In a direct link-to-dual link configuration process, the gNB-CU needs to indicate a gNB-DU connected to the target relay UE and multi-path setup indication information.

FIG. 12 describes the solution in which multi-path transmission is configured for the SRB/DRB when the remote UE first directly accesses the gNB-CU via the gNB-DU 1. The following describes a solution in which multi-path transmission is configured for an SRB/a DRB in a process of adding a direct link for remote UE when the remote UE accesses a gNB-CU via relay UE and a gNB-DU 1. FIG. 13 is an interaction flowchart of another communication method according to an embodiment of this application. As shown in FIG. 13, the method includes the following steps.

1301: A gNB determines, based on measurement and reporting information of remote UE, to configure a multi-path for the remote UE.

The remote UE may measure and report a suitable surrounding cell based on a configuration of the gNB, that is, send the measurement and reporting information to the gNB. In a procedure shown in FIG. 13, the remote UE first directly accesses a gNB-CU via relay UE and a gNB-DU 1.

1302: The gNB-CU sends a UE context setup request message to a gNB-DU 2.

The UE context setup request message is used to set up a UE context of the remote UE on the gNB-DU 2. The UE context setup request message includes SRB/DRB setup indication information of the remote UE, for example, an SRB/a DRB to be setup/modified list, to indicate the gNB-DU to set up an RLC bearer corresponding to an SRB/a DRB.

The gNB-CU may further send indication information to the gNB-DU 2, where the indication information indicates related information for the remote UE to perform sidelink communication, and may include, for example, an L2 ID of the remote UE and/or an L2 ID of the relay UE, and the indication information further indicates to add a direct link for the remote UE or indicate the remote UE to switch to a direct link. Optionally, the indication information may be sidelinkUEInformation information of the remote UE.

In a possible implementation, the gNB-CU determines a gNB-DU that determines a sidelink resource configuration. If the gNB-CU determines that the gNB-DU 2 performs sidelink resource configuration, related information for the remote UE to perform sidelink communication is indicated to the gNB-DU 1 in step 1302. In a possible implementation, if the gNB-DU 2 has determined the sidelink resource configuration and sent the sidelink resource configuration to the gNB-CU, the gNB-CU includes, in the UE context setup request message, the sidelink resource configuration determined by the gNB-DU 2.

1303: The gNB-DU 2 sends a UE context setup response message to the gNB-CU.

The UE context setup response message includes low-layer configuration information of the remote UE, and the low-layer configuration information includes a configuration of an RLC bearer. Step 1303 may be considered as that the gNB-DU 2 provides a low-layer configuration based on an indication of the gNB-CU.

The gNB-DU 2 provides, based on the related information that is for the remote UE to perform sidelink communication and that is indicated by the gNB-CU, the sidelink resource configuration, including a configuration of a sidelink resource selection mode and a configuration of a sidelink resource pool. 1304: The gNB-CU sends a UE context modification request message to the gNB-DU 1.

The UE context modification request message may indicate, for example, to update or release an SRB/a DRB. The gNB-CU further sends relay UE maintaining indication information to the gNB-DU 1, to indicate the remote UE not to release an original indirect link connection or the original relay UE. The UE context modification request message may include the first indication information.

If the gNB-CU determines to configure a primary path of the SRB/DRB to be associated with the direct link, the gNB-CU further needs to indicate the gNB-DU to provide an LCID of an RLC bearer corresponding to the primary path. For a specific process, refer to step 1205.

In a possible implementation, the gNB-CU may further send indication information to the gNB-DU 1, to indicate related information for the remote UE to perform sidelink communication, for example, L2 ID information of the remote UE. The indication information may be a SidelinkUEInformation (SUI) message of the remote UE.

In a possible implementation, the gNB-CU determines a gNB-DU that determines a sidelink resource configuration. If the gNB-CU determines that the gNB-DU 1 performs sidelink resource configuration, related information for the remote UE to perform sidelink communication is indicated to the gNB-DU 1 in step 1303; otherwise, related information for the remote UE to perform sidelink communication may not be provided. 1305: The gNB-DU 1 sends a UE context modification response message to the gNB-CU.

For step 1305, refer to step 1104. The UE context modification response message may include the second indication information.

The gNB-DU 1 determines, based on the related information that is for the remote UE to perform sidelink communication and that is indicated by the gNB-CU, and sends sidelink resource configuration information of the remote UE to the gNB-CU. The sidelink resource configuration information includes a sidelink resource selection mode and a configuration of a sidelink resource pool. In a possible implementation, because the gNB-DU 1 is connected to the remote UE through an indirect link, only a sidelink resource selection mode mode 1 is supported to be configured. In another possible implementation, a sidelink resource selection mode mode 2 may alternatively be configured for the gNB-DU 1. In this implementation, the gNB-CU further sends, to the gNB-DU 2, the sidelink resource configuration information determined by the gNB-DU 1. In a possible manner, if the gNB-DU 1 determines that the sidelink resource selection mode is the mode 1, the gNB-CU sends, to the gNB-DU 2, the sidelink resource configuration information determined by the gNB-DU 1.

It should be noted that there is no strict sequence between steps 1302 and 1303 and steps 1304 and 1305. To be specific, a possible sequence is 1302, 1303, 1304, and 1305, or may be 1304, 1305, 1302, and 1303.

1306: The gNB-CU sends an RRC reconfiguration message of the remote UE to the gNB-DU 1. The RRC reconfiguration message includes a sidelink resource configuration of the remote UE.

In the foregoing procedure of determining the sidelink resource configuration of the remote UE, the gNB-CU may receive the sidelink resource configuration from both the gNB-DU 1 and the gNB-DU 2. In another possible implementation, the gNB-CU finally determines the sidelink resource configuration provided by the gNB-DU 1 or the gNB-DU 2 as a final sidelink resource configuration in the RRC reconfiguration message of the remote UE, and indicates a final determining result to the gNB-DU 1 and/or the gNB-DU 2.

For step 1306, refer to step 1105. A configuration manner of PDCP duplication in step 1304 and step 1305 is similar to that in step 1008 to step 1010 in FIG. 10. Details are not described herein again. Configuration information of a first radio bearer may include the third indication information.

1307: The gNB-DU 1 sends the RRC reconfiguration message of the remote UE to the remote UE via the relay UE.

Step 1306 and step 1307 may be considered as that the gNB-CU generates an RRC configuration of the remote UE, and sends the RRC configuration to the remote UE.

The RRC reconfiguration message of the remote UE includes a configuration of the first radio bearer. In the configuration information of the first radio bearer, if multi-path transmission is configured for the first radio bearer of the remote UE, a primary path corresponding to the first radio bearer is further indicated, for example, an indication link type (a direct link or an indirect link) corresponding to the primary path, an LCID of a direct link corresponding to the primary path, or an ID of a PC5 relay RLC channel of an indirect link corresponding to the primary path.

1308: The remote UE accesses a target cell based on the configuration of the gNB, and maintains the connection to the relay UE.

1309: The remote UE sends an RRC reconfiguration complete message to the gNB-DU 1 through a direct link.

1310: The gNB-DU 1 sends a message 3 to the gNB-CU.

The message 3 indicates that the remote UE completes the configuration for the first radio bearer. Step 1309 and step 1310 may be considered as follows: The remote UE replies with the RRC reconfiguration complete message to the gNB through the direct link, to indicate that the configuration is completed.

1309': The remote UE sends an RRC reconfiguration complete message to the gNB-DU 2 via the relay UE.

The RRC reconfiguration complete message indicates that the configuration of the remote UE is completed.

1310': The gNB-DU 2 sends a message 3 to the gNB-CU.

The message 3 indicates that the remote UE completes the configuration for the first radio bearer. Step 1309' and step 1310' may be considered as follows: The remote UE replies with the RRC reconfiguration complete message to the gNB via the relay UE, to indicate that the configuration is completed.

1311: The gNB-CU triggers a configuration on a relay UE side.

For step 1311, refer to step 1202.

This embodiment of this application provides the multi-path configuration procedure of the remote UE in an inter-gNB-DU architecture. In an indirect link-to-dual link configuration process, the gNB-CU needs to indicate a gNB-DU connected to the relay UE and indirect link maintaining indication information.

The following describes, with reference to the accompanying drawings, structures of communication apparatuses that can implement the communication methods provided in embodiments of this application. The following briefly describes only the communication apparatus. For details about solution implementation, refer to the descriptions in the foregoing method embodiments. Details are not described below again.

FIG. 14 is a diagram of a structure of a communication apparatus 1400 according to an embodiment of this application. The communication apparatus 1400 may correspondingly implement functions or steps implemented by a terminal device in the foregoing method embodiments, or may correspondingly implement functions or steps implemented by a network device in the foregoing method embodiments. The communication apparatus may include a processing module 1410 and a transceiver module 1420. In a possible implementation, the apparatus may further include a storage unit. The storage unit may be configured to store instructions (code or a program) and/or data. The processing module 1410 and the transceiver module 1420 may be coupled to the storage unit. For example, the processing module 1410 may read the instructions (the code or the program) and/or the data in the storage unit, to implement a corresponding method. The foregoing units may be independently disposed, or may be partially or completely integrated. For example, the transceiver module 1420 may include a sending module and a receiving module. The sending module may be a transmitter, and the receiving module may be a receiver. An entity corresponding to the transceiver module 1420 may be a transceiver, or may be a communication interface.

In some possible implementations, the communication apparatus 1400 can correspondingly implement a behavior and a function of the first network device in the foregoing method embodiments. For example, the communication apparatus 1400 may be the first network device, or may be a component (for example, a chip or a circuit) used in the first network device. For example, the transceiver module 1420 may be configured to perform all receiving or sending operations performed by the first network device in the foregoing embodiments, and/or configured to support another process of the technology described in this specification. The processing module 1410 is configured to perform all operations, other than the receiving and sending operations, performed by the first network device. It may be understood that the gNB-CU in the foregoing method embodiments is an example of the first network device.

In some possible implementations, the communication apparatus 1400 can correspondingly implement a behavior and a function of the second network device in the foregoing method embodiments. For example, the communication apparatus 1400 may be the second network device, or may be a component (for example, a chip or a circuit) used in the second network device. For example, the transceiver module 1420 may be configured to perform all receiving or sending operations performed by the second network device in the foregoing embodiments, and/or configured to support another process of the technology described in this specification. The processing module 1410 is configured to perform all operations, other than the receiving and sending operations, performed by the second network device. It may be understood that the gNB-DU in the foregoing method embodiments is an example of the second network device.

In some possible implementations, the communication apparatus 1400 can correspondingly implement a behavior and a function of the first UE in the foregoing method embodiments. For example, the communication apparatus 1400 may be the first UE, or may be a component (for example, a chip or a circuit) used in the first UE. For example, the transceiver module 1420 may be configured to perform all receiving or sending operations performed by the first UE in the foregoing embodiments, and/or configured to support another process of the technology described in this specification. The processing module 1410 is configured to perform all operations, other than the receiving and sending operations, performed by the first UE in the foregoing embodiments.

FIG. 15 is a diagram of a structure of another communication apparatus 150 according to an embodiment of this application. The communication apparatus in FIG. 15 may be the foregoing first UE, the foregoing first network device, or the foregoing second network device.

As shown in FIG. 15, the communication apparatus 150 includes at least one processor 1510 and a transceiver 1520.

In some embodiments of this application, the processor 1510 and the transceiver 1520 may be configured to perform a function, an operation, or the like performed by the first network device. For example, the transceiver 1520 performs all receiving or sending operations performed by the first network device in the foregoing embodiments. The processor 1510 is configured to perform all operations, other than the receiving and sending operations, performed by the first network device.

In some embodiments of this application, the processor 1510 and the transceiver 1520 may be configured to perform a function, an operation, or the like performed by the second network device. For example, the transceiver 1520 performs all receiving or sending operations performed by the second network device in the foregoing embodiments. The processor 1510 is configured to perform all operations, other than the receiving and sending operations, performed by the second network device.

In some embodiments of this application, the processor 1510 and the transceiver 1520 may be configured to perform a function, an operation, or the like performed by the first UE. For example, the transceiver 1520 performs all receiving or sending operations performed by the first UE in the foregoing embodiments. For example, the processor 1510 is configured to perform all operations, other than the receiving and sending operations, performed by the first UE in the foregoing embodiments.

The transceiver 1520 is configured to communicate with another device/apparatus through a transmission medium. The processor 1510 receives/sends data and/or signaling via the transceiver 1520, and is configured to implement the method in the foregoing method embodiments. The processor 1510 may implement a function of the processing module 1410, and the transceiver 1520 may implement a function of the transceiver module 1420.

For example, the transceiver 1520 may include a radio frequency circuit and an antenna. The radio frequency circuit is mainly configured to: perform conversion between a baseband signal and a radio frequency signal, and process the radio frequency signal. The antenna is mainly configured to receive/send a radio frequency signal in a form of an electromagnetic wave. An input/output apparatus like a touchscreen, a display, or a keyboard is mainly configured to: receive data input by a user and output data to the user.

For example, the communication apparatus 150 may further include at least one memory 1530, configured to store program instructions and/or data. The memory 1530 is coupled to the processor 1510. Couplings in embodiments of this application are indirect couplings or communication connections between apparatuses, units, or modules, may be in an electrical form, a mechanical form, or another form, and are used for information exchange between the apparatuses, the units, or the modules. The processor 1510 may cooperate with the memory 1530. The processor 1510 may execute the program instructions stored in the memory 1530. At least one of the at least one memory may be included in the processor.

The processor 1510 may read a software program in the memory 1530, interpret and execute instructions of the software program, and process data of the software program. When data needs to be sent wirelessly, the processor 1510 performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is sent to the communication apparatus, the radio frequency circuit receives a radio frequency signal through the antenna, converts the radio frequency signal into a baseband signal, and outputs the baseband signal to the processor 1510. The processor 1510 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

A specific connection medium between the transceiver 1520, the processor 1510, and the memory 1530 is not limited in embodiments of this application. In this embodiment of this application, the memory 1530, the processor 1510, and the transceiver 1520 are connected through a bus 1540 in FIG. 15. The bus is represented by a bold line in FIG. 15. A manner of connection between other components is merely an example for illustrative description, and is not limited thereto. The bus may be classified into an address bus, a data bus, a control bus, and the like. For ease of representation, only one bold line is used to represent the bus in FIG. 15, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and can implement or perform the methods, steps, and logical block diagrams disclosed in embodiments of this application. The general-purpose processor may be a microprocessor, any conventional processor, or the like. The steps of the methods disclosed with reference to embodiments of this application may be directly performed and accomplished by a hardware processor, or may be performed and accomplished by using a combination of hardware in the processor and a software module.

FIG. 16 is a diagram of a structure of another communication apparatus 160 according to an embodiment of this application. As shown in FIG. 16, the communication apparatus shown in FIG. 16 includes a logic circuit 1601 and an interface 1602. The processing module 1410 in FIG. 14 may be implemented by using the logic circuit 1601, and the transceiver module 1420 in FIG. 14 may be implemented by using the interface 1602. The logic circuit 1601 may be a chip, a processing circuit, an integrated circuit, a system on chip (system on chip, SoC) chip, or the like. The interface 1602 may be a communication interface, an input/output interface, or the like. In this embodiment of this application, the logic circuit and the interface may be coupled to each other. A specific manner of connection between the logic circuit and the interface is not limited in embodiments of this application.

In some embodiments of this application, the logic circuit and the interface may be configured to perform a function, an operation, or the like performed by the terminal device.

In some embodiments of this application, the logic circuit and the interface may be configured to perform a function, an operation, or the like performed by the network device.

This application further provides a computer-readable storage medium. The computer-readable storage medium stores a computer program or instructions. When the computer program or the instructions are run on a computer, the computer is enabled to perform the method in the foregoing embodiments.

It should be noted that a person of ordinary skill in the art may see that all or a part of the steps of the methods in the foregoing embodiments may be implemented by a program instructing relevant hardware. The program may be stored in the computer-readable storage medium. The computer-readable storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (Electrically-Erasable Programmable Read-Only Memory, EEPROM), a compact disc read-only memory (Compact Disc read-only memory, CD-ROM) or another optical disc memory, a magnetic disk memory, a magnetic tape memory, or any other computer-readable medium capable of carrying or storing data.

This application further provides a computer program product. The computer program product includes instructions or a computer program. When the instructions or the computer program runs on a computer, the method in the foregoing embodiments is performed.

This application further provides a communication system, including the terminal device and the network device.

This application further provides a chip. The chip includes a communication interface and a processor. The communication interface is configured to receive/send a signal of the chip, and the processor is configured to execute computer program instructions, so that a communication apparatus including the chip performs the method in the foregoing embodiments.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, all or a part of the procedures or functions in embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk drive, or a magnetic tape, may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logical conflict, terms and/or descriptions in different embodiments are consistent and may be mutually referenced, and technical features in different embodiments may be combined based on an internal logical relationship thereof, to form a new embodiment.

## Claims

1. A communication method, comprising:
sending a first message, wherein the first message comprises first indication information, the first indication information indicates to configure multi-path transmission for a first radio bearer of first user equipment UE and indicates that a primary path corresponding to the first radio bearer is comprised in a first link, and the first link is a direct link or an indirect link associated with the first radio bearer; and
sending configuration information of the first radio bearer to the first UE, wherein the configuration information comprises third indication information, and the third indication information indicates the primary path of the first radio bearer.

2. The method according to claim 1, wherein the method further comprises:
receiving a second message, wherein the second message comprises indicating a first bearer corresponding to the primary path corresponding to the first radio bearer, and the first bearer is a transmission resource that is associated with the first radio bearer and that is for the first UE on the direct link.

3. The method according to claim 1 or 2, wherein the primary path is used to control a data transmission process when PDCP split or deactivated PDCP duplication is configured for the first radio bearer.

4. The method according to any one of claims 1 to 3, wherein the first indication information indicates to configure multi-path transmission for the first radio bearer of the first UE and indicates that the primary path corresponding to the first radio bearer is associated with a second bearer, the second bearer is a transmission resource between relay UE and a network device, the second bearer is used to carry data of the first radio bearer, and the first UE establishes an indirect link to the network device via the relay UE.

5. The method according to any one of claims 1 to 4, wherein the third indication information indicates an identifier of the first bearer associated with the primary path of the first radio bearer.

6. The method according to any one of claims 1 to 5, wherein the first message further comprises fourth indication information, and the fourth indication information indicates to maintain an original direct link of the first UE when an indirect link is added for the first UE.

7. The method according to claim 6, wherein the fourth indication information comprises at least one of an identifier of the relay UE or a local identifier of the first UE.

8. A communication method, comprising:
receiving a first message, wherein the first message comprises first indication information, the first indication information indicates to configure multi-path transmission for a first radio bearer of first user equipment UE and indicates that a primary path corresponding to the first radio bearer is comprised in a first link, and the first link is a direct link or an indirect link associated with the first radio bearer.

9. The method according to claim 8, wherein the method further comprises:
sending a second message, wherein the second message comprises indicating a first bearer corresponding to the primary path corresponding to the first radio bearer, and the first bearer is a transmission resource that is associated with the first radio bearer and that is for the first UE on the direct link.

10. The method according to claim 8 or 9, wherein the primary path is used to control a data transmission process when PDCP split or deactivated PDCP duplication is configured for the first radio bearer.

11. The method according to any one of claims 8 to 10, wherein the first indication information indicates to configure multi-path transmission for the first radio bearer of the first UE and indicates that the primary path corresponding to the first radio bearer is associated with a second bearer, the second bearer is a transmission resource between relay UE and a network device, the second bearer is used to carry data of the first radio bearer, and the first UE establishes an indirect link to the network device via the relay UE.

12. The method according to any one of claims 8 to 11, wherein the first message further comprises fourth indication information, and the fourth indication information indicates to maintain an original direct link of the first UE when an indirect link is added for the first UE.

13. The method according to claim 12, wherein the fourth indication information comprises at least one of an identifier of the relay UE or a local identifier of the first UE.

14. A communication method, comprising:
receiving configuration information of a first radio bearer, wherein the configuration information comprises third indication information, the third indication information indicates a primary path of the first radio bearer, and the primary path is used to control a data transmission process when PDCP split or deactivated PDCP duplication is configured for the first radio bearer.

15. The method according to claim 14, wherein the third indication information indicates an identifier of a first bearer associated with the primary path of the first radio bearer.

16. A communication apparatus, comprising a module or a unit configured to implement the method according to any one of claims 1 to 7.

17. A communication apparatus, comprising a module or a unit configured to implement the method according to any one of claims 8 to 13.

18. A communication apparatus, comprising a module or a unit configured to implement the method according to either of claims 14 and 15.

19. A communication apparatus, comprising a processor, wherein the processor is coupled to a memory, the memory stores computer program instructions, and the processor is configured to execute the computer program instructions, so that the communication apparatus performs the method according to any one of claims 1 to 15.

20. A chip, comprising:
a communication interface, configured to receive and send a signal of the chip; and
a processor, configured to execute computer program instructions, to enable a communication apparatus comprising the chip to perform the method according to any one of claims 1 to 15.

21. A computer-readable storage medium, wherein the computer-readable storage medium stores a computer program, the computer program comprises program instructions, and when the program instructions are executed, a computer is enabled to perform the method according to any one of claims 1 to 15.
